(19) Europäisches Patentamt
European Patent Office
Office européen des brevets

(11) **EP 4 769 007 A2**

(12) **EUROPÄISCHE PATENTANMELDUNG**

(43) Veröffentlichungstag:
01.07.2026  Patentblatt 2026/27

(21) Anmeldenummer: 26175680.3

(22) Anmeldetag: **28.09.2022**

(51) Internationale Patentklassifikation (IPC):
*G02B 27/00* (2006.01)

(52) Gemeinsame Patentklassifikation (CPC):
**G03B 17/00; B60R 1/22; G02B 27/0025;**
B60R 2300/402

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **08.10.2021  DE 102021126111**

(62) Dokumentnummer(n) der früheren Anmeldung(en)
nach Art. 76 EPÜ:
**22797337.7 / 4 413 422**

(71) Anmelder: **Valeo Schalter und Sensoren GmbH
74321 Bietigheim-Bissingen (DE)**

(72) Erfinder: **Putz, Thomas
96476 Bad Rodach (DE)**

(74) Vertreter: **Valeo Schalter und Sensoren
Valeo Schalte und Sensoren GmbH
Laiernstraße 12
74321 Bietigheim-Bissingen (DE)**

Bemerkungen:
Diese Anmeldung ist am 30-04-2026 als
Teilanmeldung zu der unter INID-Code 62 erwähnten
Anmeldung eingereicht worden.

(54) **KAMERAANORDNUNG, VERFAHREN ZUR AUSLEGUNG EINER KRÜMMUNG EINER ABDECKUNG UND ABDECKUNG FÜR EINE KAMERAANORDNUNG**

(57)    Die vorliegende Erfindung betrifft eine Kameraanordnung (100) für ein Fahrzeug mit einer Kamera (10) mit einer optischen Achse (AK) und einem Kamerasichtfeld (11) zur optischen Erfassung wenigstens einer Bildinformation einer Umgebung, sowie ferner mit einer flächigen Abdeckung (20) mit einer Außenfläche (21), einer Innenfläche (22) und mit wenigstens einem optisch wirksamen Bereich (23), in welchem die Abdeckung (20) lichtdurchlässig ist und für Lichtstrahlen durchdringbar ist, wobei die Abdeckung (20) mit ihrem optisch wirksamen Bereich (23) in das Kamerasichtfeld (11) ragt und das Sichtfeld (11) der Kamera (10) zumindest teilweise abdeckt und im optisch wirksamen Bereich (23) der Abdeckung (20) die Außenfläche (21) und die Innenfläche (22) jeweils wenigstens abschnittsweise gekrümmt sind, und wobei eine Krümmung der Außenfläche (21) und eine Krümmung der Innenfläche (22) im optisch wirksamen Bereich derart ausgelegt und aufeinander abgestimmt sind und die Abdeckung (20) derart relativ zur Kamera (10) angeordnet ist, dass wenigstens eine Größe, eine unerwünschte optische Beeinflussung durch die Abdeckung (20) charakterisiert, innerhalb eines definierten Bereichs liegt.

Fig. 1

EP 4 769 007 A2

**Beschreibung**

Die vorliegende Erfindung betrifft eine Kameraanordnung für ein Fahrzeug, insbesondere für einen Innenraum eines Fahrzeugs, wobei die Kameraanordnung eine Kamera und eine flächige Abdeckung aufweist. Die Kamera weist eine optische Achse und ein Kamerasichtfeld auf und ist zur optischen Erfassung wenigstens einer Bildinformation einer Umgebung ausgebildet und eingerichtet. Die flächige Abdeckung weist eine Außenfläche und eine Innenfläche auf und wenigstens einen optisch wirksamen Bereich, in welchem die Abdeckung zumindest teilweise lichtdurchlässig ist und für eine optische Erfassung einer Bildinformation aus der Umgebung von zugehörigen, die Bildinformation repräsentierenden Lichtstrahlen zumindest teilweise durchdrungen werden kann. Die Abdeckung ist dabei derart angeordnet, insbesondere derart relativ zur Kamera, dass sie mit ihrem optisch wirksamen Bereich in das Kamerasichtfeld ragt und das Sichtfeld der Kamera zumindest teilweise abdeckt, wobei sich die Außenfläche der Abdeckung auf einer von der Kamera abgewandten Seite befindet und die Innenfläche auf einer der Kamera zugewandten Seite.

Des Weiteren betrifft die vorliegende Erfindung ein Verfahren, insbesondere ein computerimplementiertes Verfahren, zur Auslegung einer Krümmung einer Abdeckung für eine Kameraanordnung.

Ferner betrifft die vorliegende Erfindung eine Abdeckung für eine Kameraanordnung.

Darüber hinaus betrifft die vorliegende Erfindung eine Vorrichtung mit Mitteln zur Durchführung eines vorgenannten Verfahrens.

Außerdem betrifft die vorliegende Erfindung ein Computerprogramm sowie ein computerlesbares Speichermedium.

Kameraanordnungen für Fahrzeuge, auch für den Innenraum eines Fahrzeugs, beispielsweise zur Müdigkeitserkennung, sind aus dem Stand der Technik grundsätzlich bekannt. Ebenso ist es bekannt, Kameras zum Schutz des Kameraobjektivs bzw. zum Verbergen der Kamera mit einer lichtdurchlässigen Abdeckung zumindest teilweise oder vollständig abzudecken. Die hierfür verwendeten optischen Abdeckungen sind dabei jeweils zumindest in dem Bereich, in welchem sie von Lichtstrahlen durchdrungen werden, welche die Bildinformation enthalten, die von der Kamera erfasst werden soll, in der Regel plan ausgebildet, d.h. nicht gekrümmt, da die beim Durchdringen der Abdeckung durch die Krümmung entstehende, unerwünschte optische Beeinflussung der Bildinformation, wie beispielsweise eine Verzerrung oder einen Kontrastverlust, derart groß wird, dass die von der Kamera erfasste Bildinformation nicht mehr die für eine Weiterverarbeitung bzw. Auswertung erforderliche Qualität aufweist. Eine plan ausgebildete Abdeckung schränkt allerdings die Anordnungsmöglichkeiten der Kameraanordnung und damit die Anwendungsmöglichkeiten sowie die Ausgestaltungsmöglichkeiten der Abdeckung erheblich ein.

Dies hat zur Folge, dass sich in vielen Fällen, insbesondere in Fällen, in denen die Kamera für eine bestimmte Funktionalität an einer bestimmten Position angeordnet werden muss, wie dies beispielsweise bei einer Kameraanordnung für einen Innenraum eines Fahrzeugs zur Müdigkeitserkennung der Fall ist, eine verborgene Anordnung der Kamera hinter einer Abdeckung entweder gar nicht realisieren lässt, da eine plane Abdeckung in dem daraus resultierenden, für die Abdeckung verfügbaren Bereich nicht möglich ist bzw. mit einer solchen Abdeckung entsprechende Sicherheitsanforderungen nicht erfüllt werden können oder sich nur mit Einschränkungen umsetzen lässt, wie beispielsweise nur mit einem unerwünschten Design des Innenraumes oder nur mit einer unerwünschten Einschränkung der Kopffreiheit. Und mit einer geeignet gekrümmten Abdeckung kann in der Regel die erforderliche Qualität der Bildinformation nicht erreicht werden.

Vor diesem Hintergrund ist es eine Aufgabe der vorliegende Erfindung, eine alternative Kameraanordnung bereitzustellen, vorzugsweise eine Kameraanordnung, welche eine größere Flexibilität bei der Ausgestaltung der Abdeckung und/oder eine größere Flexibilität bei der Wahl der Kameraposition ermöglicht, und dies insbesondere bei einer ausreichend guten optischen Erfassungsqualität der Bildinformation.

Des Weiteren ist es eine Aufgabe der vorliegenden Erfindung, ein alternatives Verfahren zur Auslegung einer Krümmung einer Abdeckung für eine Kameraanordnung bereitzustellen, insbesondere ein verbessertes Verfahren, mit welchem sich vorzugsweise eine größere Flexibilität bei der Ausgestaltung der Abdeckung und/oder eine größere Flexibilität bei der Wahl der Kameraposition erreichen lässt, und dies insbesondere bei einer ausreichend guten optischen guten optischen Erfassungsqualität der Bildinformation.

Ferner ist es eine Aufgabe der vorliegenden Erfindung, eine alternative Abdeckung für eine Kameraanordnung bereitzustellen, insbesondere eine verbesserte Abdeckung, mit welcher sich vorzugsweise eine größere Flexibilität bei der Ausgestaltung der Abdeckung und/oder eine größere Flexibilität bei der Wahl der Kameraposition erreichen lässt, und dies insbesondere bei einer ausreichend guten optischen guten optischen Erfassungsqualität der Bildinformation.

Darüber hinaus ist es eine Aufgabe der vorliegenden Erfindung, eine alternative, insbesondere verbesserte, Vorrichtung mit Mitteln zur Durchführung eines vorgenannten Verfahrens bereitzustellen, ein entsprechendes alternatives, insbesondere verbessertes Computerprogramm und ein alternatives, insbesondere verbessertes computerlesbares Speichermedium.

Diese Aufgaben werden erfindungsgemäß durch eine Kameraanordnung, durch ein Verfahren zur Auslegung einer Krümmung einer Abdeckung für eine Kameraanordnung, durch eine Abdeckung für eine Kameraanordnung, durch eine Vorrichtung mit Mitteln zur Durchführung eines vorgenannten Verfahrens, durch ein entsprechendes Computerprogramm sowie durch ein computerlesbares Speichermedium mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren. Der Wortlaut der Ansprüche wird durch ausdrückliche Bezugnahme zum Inhalt der Beschreibung gemacht.

Eine erfindungsgemäße Kameraanordnung für ein Fahrzeug ist insbesondere für einen Innenraum eines Fahrzeugs ausgebildet und weist eine Kamera mit einer optischen Achse und einem Kamerasichtfeld zur optischen Erfassung wenigstens einer Bildinformation einer Umgebung und eine flächige Abdeckung mit einer Außenfläche und einer Innenfläche und mit wenigstens einem optisch wirksamen Bereich auf, wobei die Abdeckung in ihrem optisch wirksamen Bereich zumindest teilweise lichtdurchlässig ist und für eine optische Erfassung einer Bildinformation aus der Umgebung von zugehörigen, die Bildinformation repräsentierenden Lichtstrahlen zumindest teilweise durchdrungen werden kann. Die Abdeckung ist dabei derart angeordnet, dass sie mit ihrem optisch wirksamen Bereich in das Kamerasichtfeld ragt und das Sichtfeld der Kamera zumindest teilweise abdeckt, wobei sich die Außenfläche auf einer von der Kamera abgewandten Seite befindet und die Innenfläche auf einer der Kamera zugewandten Seite.

Eine erfindungsgemäße Kameraanordnung ist dadurch gekennzeichnet, dass im optisch wirksamen Bereich der Abdeckung die Außenfläche und die Innenfläche jeweils wenigstens abschnittsweise gekrümmt sind, wobei eine Krümmung der Außenfläche und eine Krümmung der Innenfläche im optisch wirksamen Bereich derart ausgelegt und derart aufeinander abgestimmt sind und die Abdeckung derart relativ zur Kamera angeordnet ist, dass wenigstens eine Größe, welche eine unerwünschte optische Beeinflussung durch die Abdeckung charakterisiert, innerhalb eines definierten Bereichs liegt.

Hierdurch kann sichergestellt werden, dass die zu erfassende Bildinformation auch bei einer gekrümmten Abdeckung mit ausreichend guter Genauigkeit bzw. für die gewünschte Weiterverarbeitung geeignet, erfasst werden kann. Insbesondere lässt sich hierdurch ein geringer Kontrastverlust auch mit einer gekrümmten Abdeckung erreichen.

Eine erfindungsgemäße Kameraanordnung mit einer im optisch wirksamen Bereich zumindest teilweise gekrümmten Abdeckung ermöglicht eine flexiblere Positionierung der Kamera, insbesondere eine verborgene Anordnung der Kamera auch in Bereichen, die aus Designgründen oder anderen Gründen eine zumindest abschnittsweise stärker gekrümmte Abdeckung erfordern.

Ist beispielsweise die Krümmung der Außenfläche durch das Design vorgegeben, kann durch eine Anpassung der Krümmung der Innenfläche - ohne, dass das Design der Außenfläche und damit das Design der Abdeckung in einem von außen sichtbaren Bereich negativ zu beeinflussen - die durch die Krümmung der Außenfläche beim Durchdringen der Abdeckung hervorgerufene optische Beeinflussung der Lichtstrahlen reduziert oder sogar teilweise fast vollständig kompensiert werden. In jedem Fall lässt sich auf diese Weise eine erhebliche Verbesserung der Erfassungsqualität der Bildinformation erreichen und die unerwünschte optische Beeinflussung in einem definierten Bereich gehalten werden. Somit ermöglicht eine erfindungsgemäße Kameraanordnung auch eine flexible Ausgestaltung der Abdeckung, insbesondere der Außenfläche, bei einer dennoch ausreichend guten optischen Erfassungsqualität der Bildinformation nach dem Durchdringen der Abdeckung.

Unter einem "definierten Bereich" wird im Sinne der vorliegenden Anmeldung dabei ein Wertebereich einer Größe bzw. eines Wertes verstanden, der geeignet ist, eine unerwünschte optische Beeinflussung der die Bildinformation repräsentierenden Lichtstrahlen, welche die Abdeckung bei einer Erfassung einer Bildinformation aus der Umgebung mittels der Kamera durchdringen, zu charakterisieren, beispielsweise ein Wertebereich, der einen zulässigen Kontrastverlust definiert, oder ein Wertebereich der einen erforderlichen Rest-Kontrast angibt. Denkbar ist grundsätzlich jeder Wertebereich, einen Abbildungsfehler charakterisiert. So kann beispielsweise der definierte Bereich auch ein Wertebereich sein, welcher eine zulässige Verzerrung angibt.

Bevorzugt ist dabei eine Bereichsgrenze des definierten Bereichs bzw. des zulässigen Wertebereichs durch den maximal erreichbaren Wert der gewählten Größe definiert, der ohne jegliche optische Beeinflussung erreicht werden kann. Eine der Bereichsgrenzen kann aber auch durch den ohne Abdeckung mit den jeweiligen übrigen Komponenten der Kameraanordnung erreichbaren Wert der gewählten Größe definiert sein oder durch einen anderen definierten Wert.

Die andere Bereichsgrenze ist besonders bevorzugt durch einen Wert definiert, insbesondere einen Grenzwert, mit welchem sich trotz der unerwünschten optische Beeinflussung, d.h. trotz des verursachten Abbildungsfehlers, mit der Kameraanordnung noch eine Bildinformation mit für den gewünschten Weiterverarbeitungszweck ausreichender Qualität erfassen lässt.

Eine erfindungsgemäße Kameraanordnung ist insbesondere zur Verwendung in einem Fahrzeug ausgebildet, insbesondere zur Verwendung in einem Fahrzeug in Verbindung oder als Teil eines Assistenzsystems, bevorzugt als Teil eines Fahrerassistenzsystems.

In einer vorteilhaften Ausgestaltung einer Kameraanordnung gemäß der vorliegenden Erfindung ist wenigstens die Kamera, insbesondere außerdem die Abdeckung der Kameraanordnung, zur Anordnung in einem Fahrzeuginnenraum ausgebildet, insbesondere zur Anordnung im Innenraum eines Personenkraftwagens oder eines Führerhauses eines Lastkraftwagen. Kamera und/oder Abdeckung oder sogar die gesamte Kameraanordnung können beispielsweise dazu ausgebildet sein, von unten am Dach, beispielsweise im oder am Dachmodul oder im Bereich des Dachmoduls, in welchem in der Regel die Bedienelemente zur Betätigung eines Schiebedachs untergebracht sind, befestigt zu werden. Durch eine Anordnung der Kameraanordnung bzw. der zugehörigen Kamera an einer der vorbeschriebenen Positionen lassen sich besonders gut Bildinformationen von einem Fahrzeugführer erfassen, insbesondere für eine Müdigkeitserkennung.

Eine Kameraanordnung gemäß der vorliegenden Erfindung kann aber auch dazu ausgebildet sein, im Kombiinstrument, d.h. in der Instrumententafel, oder im Bereich des oberen Endes der A-Säule, im oder am Dach- oder Türrahmen oder der Sonnenblende auf der Fahrer- oder der Beifahrerseite im Innenraum des Fahrzeugs befestigt zu werden. Auch durch eine derartige Anordnung der Kameraanordnung bzw. der zugehörigen Kamera an lassen sich besonders gut Bildinformationen von einem Fahrzeugführer erfassen, insbesondere für eine Müdigkeitserkennung.

Bevorzugt ist die Kameraanordnung dabei derart ausgebildet, dass sich eine für den jeweiligen Funktions- bzw. Verwendungszweck optimale Positionierung erreichen lässt, in welcher die zu erfassende Bildinformation möglichst gut und fehlerfrei mittels der Kamera der Kameraanordnung erfasst werden kann.

Eine erfindungsgemäße Kameraanordnung, insbesondere eine Kameraanordnung, die zur Anordnung im Innenraum eines Fahrzeugs bestimmt ist, ist bevorzugt dazu ausgebildet und eingerichtet, Bildinformationen aus dem Innenraum eines Fahrzeugs zu erfassen, insbesondere zumindest teilweise entgegen einer Fahrtrichtung, wie beispielsweise Bildinformationen vom Kopf eines Fahrers, d.h. eines Fahrzeugführers, beispielsweise zum Zwecke einer Müdigkeitserkennung. Entsprechende Bildinformationen können beispielsweise eine Kopfneigung, eine Blinzelfrequenz oder eine Blickrichtung sein.

Eine Kameraanordnung gemäß der vorliegenden Erfindung kann alternativ oder zusätzlich auch dazu ausgebildet sein, Bildinformationen von einer Umgebung eines Fahrzeugs zu erfassen, beispielsweise Bildinformationen aus der Umgebung vor und/oder seitlich vor und/oder neben und/oder hinter dem Fahrzeug. Eine solche Kameraanordnung gemäß der vorliegenden Erfindung kann insbesondere für eine Verwendung in einem Fahrerassistenzsystem, wie beispielsweise einem Abstandsregelsystem, einem Parkassistenzsystem, einem Rückwährtsfahr-Assistenzsystem, einem Anhänger-Parkassistent oder dergleichen ausgebildet sein. Zu diesem Zweck können Kamera und/oder Abdeckung oder die gesamte Kameraanordnung bevorzugt beispielsweise im Bereich des Fahrzeughecks, an der Fahrzeugseite, im Stoßfänger vorne oder hinten unter dem Dach am Heck oder dergleichen angeordnet werden.

Eine Kameraanordnung gemäß der vorliegenden Erfindung zur Erfassung einer Umgebungsinformation kann dazu ausgebildet sein, im Innenraum eines Fahrzeugs angeordnet zu werden und/oder dazu ausgebildet sein, außerhalb des Innenraums an der Karosserie bzw. dem Fahrzeugaufbau befestigt zu werden.

Bei einer Kameraanordnung gemäß der vorliegenden Erfindung, die dazu ausgebildet ist, außerhalb des Innenraums an der Karosserie bzw. dem Fahrzeugaufbau befestigt zu werden, ist die Kamera vorzugsweise vollständig durch die Abdeckung abgedeckt, insbesondere wenigstens das komplette Sichtfeld der Kamera. Hierdurch kann die Kamera, insbesondere deren Optik bzw. deren optische Komponenten, auf einfache, aber wirkungsvolle Art und Weise vor Schmutz, Feuchtigkeit, Nässe sowie Steinschlag geschützt werden.

Eine erfindungsgemäße Kameraanordnung kann jeweils ein oder mehrere Kameras umfassen, wobei das Sichtfeld wenigstens einer Kamera erfindungsgemäß zumindest teilweise durch eine Abdeckung abgedeckt ist, welche im optisch wirksamen Bereich zumindest teilweise gekrümmt ist. Dabei kann das Sichtfeld von einer oder mehreren Kameras jeweils durch eine entsprechende, erfindungsgemäß im optisch wirksamen Bereich zumindest teilweise gekrümmte Abdeckung zumindest teilweise abgedeckt sein, wobei jeder Kamera insbesondere jeweils eine eigene, separate Abdeckung zugeordnet sein kann. Alternativ kann mehreren Kameras, insbesondere wenigstens zwei Kameras, eine gemeinsame Abdeckung zugeordnet sein. D.h. zwei oder mehr Kameras einer Kameraanordnung gemäß der vorliegenden Erfindung können auch durch eine entsprechende gemeinsame, erfindungsgemäß im optisch wirksamen Bereich zumindest teilweise gekrümmte Abdeckung zumindest teilweise abgedeckt sein. Ebenso kann eine einzige Kamera durch mehrere separate entsprechende, erfindungsgemäß im optisch wirksamen Bereich zumindest teilweise gekrümmte Abdeckungen zumindest teilweise oder vollständig abgedeckt sein.

Durch die Verwendung mehrerer Kameras kann eine verbesserte Erfassung der relevanten Bildinformation erreicht werden. Durch die Verwendung mehrerer Abdeckungen kann eine verbesserte und vor allem flexible Abdeckung der Kameras erreicht werden, welche durch die Anpassung einzelner Abdeckungen flexibel angepasst werden kann.

Eine erfindungsgemäße Kameraanordnung kann, unabhängig von der Anzahl ihrer Kameras und Abdeckungen, zur Integration in ein Kamerasystem mit mehreren Kameras bzw. Kameraanordnungen ausgebildet sein. Insbesondere kann eine Kameraanordnung gemäß der vorliegenden Erfindung für eine Verwendung in einem Kamerasystem mit mehreren Kameras bzw. Kameraanordnungen ausgebildet sein und dazu ausgebildet und eingerichtet sein, mit wenigstens einer weiteren Kamera des Kamerasystems eine 3D-Stereokamera auszubilden. Hierdurch lassen sich besonders einfach Assistenzfunktionen realisieren, welche eine räumliche bzw. eine dreidimensionale Bild- bzw. Rauminformation benötigen.

In einer möglichen und vorteilhaften Ausgestaltung einer Kameraanordnung gemäß der vorliegenden Erfindung kann wenigstens eine Kamera der Kameraanordnung einen festen Fokus aufweisen, d.h. wenigstens eine Kamera ist eine Kamera mit nicht verstellbarem Brennpunkt bzw. nicht verstellbarer Brennweite. Dies ermöglicht die Bereitstellung einer einfachen und kostengünstigen Kameraanordnung sowie eine einfache Steuerung der Kamera und der damit der Bilderfassung. Um mit einer solchen Kamera die Bildinformation in ausreichend guter Qualität erfassen zu können, dürfen die optischen Beeinflussungen, insbesondere Abbildungsfehler und Kontrastverluste, die insbesondere beim Durchdringen der zugehörigen Abdeckung entstehen, jedoch nicht zu groß werden bzw. müssen durch die Abdeckung kompensiert werden, da diese nicht durch die Anpassung der Brennweite der Kamera ausgeglichen werden können.

Alternativ können ein oder mehrere Kameras einer Kameraanordnung gemäß der vorliegenden Erfindung jedoch auch mit verstellbarem Fokus, d.h. mit verstellbarem Brennpunkt bzw. verstellbarer Brennweite ausgebildet sein, insbesondere als Autofokus-Kamera.

Alternativ oder zusätzlich kann in einer weiteren möglichen Ausgestaltung einer Kameraanordnung gemäß der vorliegenden Erfindung wenigstens eine Kamera der Kameraanordnung dazu ausgebildet sein, ortsfest, d.h. unbeweglich, im oder am Fahrzeug befestigt zu werden. Auch in diesem Fall dürfen die optischen Beeinflussungen, insbesondere Abbildungsfehler und Kontrastverluste, die insbesondere beim Durchdringen der zugehörigen Abdeckung entstehen, nicht zu groß werden bzw. müssen durch die Abdeckung kompensiert werden, da diese nicht durch die Anpassung der Position der Kamera ausgeglichen werden können.

Alternativ können ein oder mehrere Kameras einer Kameraanordnung gemäß der vorliegenden Erfindung dazu ausgebildet sein, beweglich, d.h. in wenigstens einer Richtung verschiebbar und/oder um wenigstens eine Achse schwenkbar, im oder am Fahrzeug befestigt zu werden.

Die Abdeckung einer Kameraanordnung gemäß der vorliegenden Erfindung kann Teil eines Gehäuses sein, insbesondere eine Gehäusewand oder eine Blende, wie sie häufig in Fahrzeuginnenräumen oder außen an der Karosserie bzw. am Fahrzeugaufbau zu finden ist. Beispielsweise kann die Abdeckung eine Blende als Teil des Armaturenbretts oder eine Blende im Lenkrad sein oder eine Blende oder eine Verkleidung oder ein Teil hiervon an einer sonstigen Stelle im Innenraum.

Die Außenfläche der Abdeckung wird insbesondere durch eine äußere Wandung der Abdeckung gebildet, während die Innenfläche vorzugsweise durch eine innere Wandung der Abdeckung gebildet ist, wobei ein Abstand zwischen der Innenfläche und der Außenfläche in einer Richtung senkrecht zur Außenfläche bzw. Innenfläche jeweils die Wandstärke der Abdeckung in diesem Bereich definiert.

Unter einem "optisch wirksamen Bereich" der Abdeckung wird im Sinne der vorliegenden Erfindung ein Bereich verstanden, der dazu ausgebildet ist, Lichtstrahlen, die diesen Bereich zu durchdringen, optisch zu beeinflussen, insbesondere ähnlich wie eine Linse. Der optisch wirksame Bereich kann dabei beispielsweise dazu ausgebildet sein, Lichtstrahlen zu brechen, zu bündeln, zu streuen, zu reflektieren, zu verzerren oder dergleichen.

Der optisch wirksame Bereich der Abdeckung einer erfindungsgemäßen Kameraanordnung ist dabei zumindest teilweise lichtdurchlässig (transluzent), insbesondere nahezu vollständig oder vollständig lichtdurchlässig, sodass Lichtstrahlen den optisch wirksamen Bereich durchdringen können, insbesondere derart, dass mittels der Kamera ein Bild von der Umgebung auf der von der Kamera abgewandten Seite hinter der Abdeckung erfasst werden kann.

Die Abdeckung kann, insbesondere in ihrem optisch wirksamen Bereich, transparent ausgebildet sein oder wie z.B. eine Lichtabdeckung (Blinker, Rücklicht, Bremslicht Scheinwerfer etc.) farbig oder milchweiß ausgebildet sein. Die Abdeckung kann aber auch von ihrem optischen Erscheinungsbild her an das übrige Design des Fahrzeugs, beispielsweise im Innenraum, angepasst sein und ähnlich einer herkömmlichen Blende oder Abdeckung für einen Innenraum eines Fahrzeugs ausgebildet sein und beispielsweise schwarz oder grau oder analog zu den übrigen Blenden im Fahrzeug. Die Abdeckung kann einfarbig ausgebildet sein oder verschiedenfarbig, wobei der optisch wirksame Bereich anders ausgebildet sein kann als der Rest der Abdeckung. Wichtig ist lediglich, dass der optisch wirksame Bereich ausreichend lichtdurchlässig ist zur Erfassung der gewünschten Bildinformation.

Bevorzugt weist die Abdeckung einer Kameraanordnung gemäß der vorliegenden Erfindung eine definierte geometrische Form aus und ist insbesondere im Wesentlichen formstabil bzw. starr ausgebildet. Dies wirkt sich vorteilhaft auf die optischen Eigenschaften der Abdeckung aus. Insbesondere kann hierdurch sichergestellt werden, dass die Abdeckung nahezu konstante bzw. gleichbleibende optische Eigenschaften aufweist und sich insbesondere möglichst nicht verformt bzw. in ihrer Krümmung verändert.

Besonders bevorzugt ist die Abdeckung aus Kunststoff hergestellt, insbesondere im Spritzgussverfahren. Die Abdeckung kann aus einem oder aus mehreren Werkstoffen hergestellt sein. D.h. die Abdeckung kann insbesondere in 2K-Bauteil sein, wobei beispielsweise der optisch wirksame Bereich aus einem ersten Kunststoff hergestellt sein kann und ein an diesen angrenzender Bereich, beispielsweise ein Befestigungsbereich, aus einem anderen Werkstoff, insbesondere ebenfalls einem Kunststoff. Alternativ kann die Abdeckung aber auch teilweise oder vollständig aus Glas hergestellt sein. Kunststoff ist jedoch in vielen Fällen aufgrund seines geringeren Gewichts und der in der Regel anderen Brucheigenschaften vorteilhafter. In einigen Fällen kann eine Abdeckung aus Glas jedoch vorteilhafter sein, da dieses in der Regel die besseren optischen Eigenschaften aufweist.

Für besonders gute optische Eigenschaften weist die Abdeckung zumindest im optisch wirksamen Bereich eine Oberflächenrauhigkeit von kleiner xx $\mu$m auf und hinsichtlich ihrer Abmessungen und ihrer Geometrie besonders bevorzugt Toleranzen von weniger als $\pm 30\,\mu$m, $\pm 20\,\mu$m oder $\pm 10\,\mu$m. Besonders bevorzugt ist die Abdeckung einer erfindungsgemäßen Kameraanordnung mittels eines Formwerkzeugs hergestellt, welches eine zumindest in einem zum optisch wirksamen Bereich korrespondierenden Bereich gefinishte Oberfläche aufweist, vorzugsweise mit einer Oberflächenrauhigkeit von weniger als xx $\mu$m.

Eine Größe, welche besonders gut geeignet ist, eine unerwünschte optische Beeinflussung durch die Abdeckung zu charakterisieren ist vorliegend eine Größe, welche einen Kontrast oder einen Kontrastverlust charakterisiert.

In einer vorteilhaften Ausgestaltung einer Kameraanordnung gemäß der vorliegenden Erfindung liegt daher ein Kontrastverlust, insbesondere ein durch die Abdeckung verursachter Kontrastverlust bzw. ein erforderlicher Rest-Kontrast in einem definierten Bereich. D.h. besonders bevorzugt sind die Krümmung der Außenfläche der Abdeckung und die Krümmung der Innenfläche der Abdeckung derart aufeinander abgestimmt, dass ein maximal zulässiger Kontrastverlust bzw. ein verbleibender, mindestens erforderlicher Rest-Kontrast in einem definierten Bereich liegt. Besonders bevorzugt in einem Bereich von 0% Kontrastverlust (dem Wert der ohne jegliche unerwünschte Beeinflussung erreicht werden kann) bzw. 100% Rest-Kontrast bis höchstens zu einem definierten Grenzwert für den Kontrastverlust bzw. oberhalb von einem mindestens erforderlichen Rest-Kontrast.

Besonders bevorzugt ist bei einer Kameraanordnung gemäß der vorliegenden Erfindung die Krümmung der Abdeckung im optisch wirksamen Bereich derart gewählt und die Abdeckung derart relativ zur Kamera angeordnet, dass ein Rest-Kontrast, welcher mithilfe einer sogenannten Modulationsübertragungsfunktion (MFT) bestimmt wird, bei 50 Linienpaaren pro Millimeter (lp/mm) wenigstens 30%, 40%, 50%, 60% oder 70% beträgt, höchstens jedoch 100%, bzw. ein entsprechender Kontrastverlust weniger als 70%, 60%, 50%, 40% oder weniger als 30% beträgt, jedoch nicht weniger als 0%, d.h. dass für bis zu 50 lp/mm der Kontrast stets mindestens 30%, 40%, 50%, 60% oder 70% beträgt bzw. ein entsprechender Kontrastverlust für bis zu 50 lp/mm stets geringer ist als 70%, 60%, 50%, 40% oder 30%. Hierdurch kann in den meisten Fällen eine für eine entsprechende Weiterverarbeitung geeignete, ausreichend gute Erfassung der Bildinformation erreicht werden. Insbesondere kann hierdurch eine für eine Weiterverarbeitung zur Müdigkeitserkennung geeignete und ausreichend gute Erfassung der Bildinformation erreicht werden. Ebenso scheint mit den vorgenannten Anforderungen an den Kontrast jeweils auch eine ausreichend gute Erfassung der Bildinformation zur Verwendung in anderen Assistenzfunktionen bzw. Assistenzsystemen möglich.

Für nähere Informationen zur Modulationsübertragungsfunktion wird auf https://de.wikipedia.org/wiki/Modulations%C3%BCbertragungsfunktion verwiesen, zuletzt abgerufen am 22.08.2021.

Die Modulationsübertragungsfunktion kann jeweils in verschiedenen Ebenen ermittelt werden. Folglich können für verschiedene Ebene verschiedene Kontrastwerte bzw. verschiedene Modulationsübertragungsfunktionen in Bezug auf den Kontrast ermittelt werden. Beispielsweise kann die Modulationsübertragungsfunktion für eine Abdeckung in einer sogenannten Sagittalebene und einer sogenannten Tangentialebene sowie darüber hinaus in weiteren Ebenen ermittelt werden. Aus den Kontrastwerten der verschiedenen Ebenen kann ein Mittelwert aus den in diesen beiden Ebenen ermittelten Kontrastwerten sowie auch jeweils ein minimaler Kontrastwert aus den jeweiligen Kontrastwerten beider Ebenen bestimmt werden.

Besonders bevorzugt ist bei einer Kameraanordnung gemäß der vorliegenden Erfindung die Krümmung der Abdeckung im optisch wirksamen Bereich derart gewählt und die Abdeckung derart relativ zur Kamera angeordnet, dass ein minimaler Kontrast in der Sagittalebene und der Tangentialebene, welcher mithilfe einer sogenannten Modulationsübertragungsfunktion (MFT) bestimmt wird, bei 50 Linienpaaren pro Millimeter (lp/mm) wenigstens 30%, 40%, 50%, 60% oder 70% beträgt. höchstens jedoch 100%, bzw. ein entsprechender Kontrastverlust sowohl in der Sagittalebene als auch in der Tangentialebene weniger als 70%, 60%, 50%, 40% oder weniger als 30% beträgt, jedoch nicht weniger als 0%, d.h. dass für bis zu 50 lp/mm der Kontrast in der Sagittalebene und der Tangentialebene stets mindestens 30%, 40%, 50%, 60% oder 70% beträgt bzw. ein entsprechender Kontrastverlust für bis zu 50 lp/mm stets geringer ist als 70%, 60%, 50%, 40% oder 30%.

Alternativ kann es in einigen Fällen hingegen sinnvoll sein, wenn ein mittlerer bzw. durchschnittlicher Kontrast, arithmetisch ermittelt aus den Modulationsübertragungsfunktionen der Sagittalebene und der Tangentialebene bei 50 Linienpaaren pro Millimeter (lp/mm) wenigstens 30%, 40%, 50%, 60% oder 70% beträgt, höchstens 100%, bzw. ein entsprechender mittlerer Kontrastverlust weniger als 70%, 60%, 50%, 40% oder weniger als 30% beträgt, jedoch nicht weniger als 0%, d.h. dass für bis zu 50 lp/mm ein mittlerer Kontrast stets mindestens 30%, 40%, 50%, 60% oder 70% beträgt bzw. ein entsprechender Kontrastverlust für bis zu 50 lp/mm stets geringer ist als 70%, 60%, 50%, 40% oder 30%.

Anstatt die Krümmung der Abdeckung in Abhängigkeit von dem erreichbaren Kontrast anzupassen bzw. die Krümmung derart zu wählen, dass ein Mindest-Kontrast sichergestellt ist bzw. ein maximal zulässiger Kontrastverlust nicht überschritten wird, kann die Krümmung grundsätzlich auch in Abhängigkeit von einem oder mehreren anderen, einen Abbildungsfehler charakterisierenden Werten angepasst werden. Im vorliegenden Fall hat sich der Kontrast zur Charakterisierung bzw. Minimierung des Abbildungsfehlers bzw. zur Anpassung der Krümmung jedoch als am vorteilhaftesten erwiesen.

Der Begriff "Tangentialebene" wird im Sinne der vorliegenden Erfindung dabei gemäß seiner Definition in der geometrischen Optik verwendet und entspricht der oft alternativ verwendeten Bezeichnung "Meridionalebene", wobei eine Tangential- oder Meridionalebene allgemein eine Ebene ist, innerhalb welcher die optische Achse des Systems (=die Symmetrieachse des entsprechenden optischen Systems) verläuft. Eine Tangentialebene (= Meridionalebene) durch einen Objektpunkt ist diejenige Tangentialebene, innerhalb welcher die Symmetrieachse des optischen Systems verläuft und in welcher der jeweilige, zugehörige Objektpunkt liegt.

Der Begriff "Sagittalebene" wird im Sinne der vorliegenden Erfindung ebenfalls gemäß seiner Definition in der geometrischen Optik verwendet. Entsprechend wird unter der "Sagittalebene" eine Ebene verstanden, welche senkrecht auf der zugehörigen Meridionalebene bzw. Tangentialebene steht und ebenfalls durch den zugehörigen Objektpunkt verläuft. Für einen Objektpunkt, der auf der optischen Achse liegt, bilden alle Ebenen, die den Hauptstrahl enthalten, eine Schar von Meridionalebenen. In diesem Fall existiert keine Sagittalebene.

In einigen Fällen kann des Weiteren durch die Krümmung, insbesondere wenn diese gezielt und an die jeweiligen Randbedingungen angepasst ist, wie beispielsweise an die Kameraposition relativ zur Abdeckung sowie das Material und die Wandstärke der Abdeckung, eine unerwünschte optische Beeinflussung der die Bildinformation repräsentierenden Lichtstrahlen, welche die Abdeckung bei einer Erfassung einer Bildinformation aus der Umgebung mittels der Kamera durchdringen, reduziert bzw. wenigstens teilweise vermieden werden. Hierdurch lässt sich eine noch größere Flexibilität bei der Positionierung der Kamera erreichen.

In einer möglichen und vorteilhaften Ausgestaltung einer Kameraanordnung gemäß der vorliegenden Erfindung ist die Abdeckung insbesondere derart relativ zur Kamera angeordnet, dass das Kamerasichtfeld zumindest so viel von der Abdeckung abgedeckt ist, dass die optische Achse der Kamera die Abdeckung innerhalb des optisch wirksamen Bereichs durchstößt, wobei die optische Achse der Kamera vorzugsweise nicht mit der optischen Achse des optisch wirksamen Bereichs der Abdeckung fluchtet, sondern insbesondere parallel zu dieser oder mit einem Winkel zu dieser verläuft, wobei die optische Achse der Kamera die optische Achse des optisch wirksamen Bereichs der Abdeckung insbesondere schneidet oder windschief zu dieser verläuft. Das heißt, bei einer Kameraanordnung gemäß der vorliegenden Erfindung kann die optische Achse der Kamera versetzt zur optischen Achse des optisch wirksamen Bereichs der Kamera verlaufen. Dies ermöglicht eine besonders flexible Anordnung von Abdeckung und Kamera zueinander und eröffnet eine Vielzahl von Anordnungsmöglichkeiten der Kameraanordnung in oder an einem Fahrzeug.

Dabei kann die Abdeckung insbesondere derart gekrümmt sein und relativ zur Kamera angeordnet sein, dass die optische Achse der Kamera die Außenfläche und/oder die Innenfläche der Abdeckung nicht senkrecht durchstößt bzw. eine zugehörige Tangentialebene eines zugehörigen Durchstoßpunktes nicht senkrecht durchstößt, sondern mit einem von 90 Grad abweichenden Winkel zu dieser Tangentialebene. D.h. die Abdeckung kann derart gekrümmt sein und die Kamera derart relativ zur Abdeckung angeordnet sein, dass die optische Achse der Kamera im Durchstoßpunkt der Außenfläche nicht senkrecht auf der Außenfläche der Abdeckung steht und/oder im Durchstoßpunkt der Innenfläche nicht senkrecht auf der Innenfläche im Durchstoßpunkt bzw. einer jeweils zugehörigen Tangentialebene steht. Dies ermöglicht eine besonders flexible Anordnung von Abdeckung und Kamera zueinander und eröffnet eine Vielzahl von Anordnungsmöglichkeiten der Kameraanordnung in oder an einem Fahrzeug.

In einer weiteren vorteilhaften, möglichen Ausgestaltung einer Kameraanordnung gemäß der vorliegenden Erfindung ist die Außenfläche in ihrem optisch wirksamen Bereich zumindest teilweise konvex gekrümmt, wobei die Außenfläche vorzugweise wenigstens in einer ersten Referenzebene konvex gekrümmt ist, insbesondere über den gesamten optisch wirksamen Bereich in dieser ersten Referenzebene, und insbesondere die Krümmung der Außenfläche in dieser ersten Referenzebene durch eine erste Schar von in der ersten Referenzebene liegenden, ersten Krümmungskreisen mit jeweils einem ersten Krümmungsmittelpunkt und einem ersten Krümmungsradius definiert ist. Hierdurch können vorteilhafte optische Eigenschaften der Abdeckung erreicht werden, insbesondere hinsichtlich der optischen Beeinflussung der die Bildinformation enthaltenden Lichtstrahlen, welche die Abdeckung durchdringen.

Unter einer "ersten Referenzebene" wird im Sinne der vorliegenden Erfindung dabei insbesondere diejenige Ebene verstanden, in welcher der Durchstoßpunkt der optischen Achse der Kamera durch die Außenfläche liegt und welche sich senkrecht zur Hauptebene der Abdeckung im optisch wirksamen Bereich erstreckt, wobei die Hauptebene sich senkrecht zur optischen Achse des optisch wirksamen Bereichs der Abdeckung erstreckt.

In einer weiteren möglichen und vorteilhaften Ausgestaltung einer Kameraanordnung gemäß der vorliegenden Erfindung ist die Innenfläche in ihrem optisch wirksamen Bereich zumindest teilweise konkav gekrümmt, wobei die Innenfläche vorzugsweise wenigstens in der ersten Referenzebene konkav gekrümmt ist, insbesondere über den gesamten optisch wirksamen Bereich in dieser ersten Referenzebene, und die Krümmung der Innenfläche in dieser ersten Referenzebene durch eine zweite Schar von in der ersten Referenzebene liegenden, zweiten Krümmungskreisen mit jeweils einem zweiten Krümmungsmittelpunkt und einem zweiten Krümmungsradius definiert ist. Hierdurch können vorteilhafte optische Eigenschaften der Abdeckung erreicht werden, insbesondere hinsichtlich der optischen Beeinflussung der die Bildinformation enthaltenden Lichtstrahlen, welche die Abdeckung durchdringen.

Die Außenfläche der Abdeckung kann dabei in mehreren Ebenen, insbesondere in mehreren, zur ersten Referenzebene parallelen Ebenen und/oder in einer oder mehreren, senkrecht auf der ersten Referenzebene stehenden Ebenen konvex gekrümmt sein, insbesondere in ihrem gesamten optisch wirksamen Bereich. D.h. die Abdeckung einer erfindungsgemäßen Kameraanordnung kann in mehreren Ebenen bzw. Richtungen gekrümmt verlaufen. Hierdurch lässt sich eine besonders vielfältig einsetzbare und an vielen Positionen im oder am Fahrzeug platzierbare Kameraanordnung bereitstellen.

Die Außenfläche der Abdeckung kann insbesondere außerdem in wenigstens einer sich senkrecht zur ersten Referenzebene erstreckenden zweiten Referenzebene zumindest teilweise gekrümmt sein, insbesondere über den gesamten optisch wirksamen Bereich in dieser zweiten Referenzebene, wobei die Krümmung der Außenfläche in dieser zweiten Referenzebene vorzugsweise durch eine zweite Schar von in der zweiten Referenzebene liegenden, dritten Krümmungskreisen mit jeweils einem dritten Krümmungsmittelpunkt und einem dritten Krümmungsradius definiert ist.

Unter einer "zweiten Referenzebene" wird im Sinne der vorliegenden Erfindung dabei insbesondere diejenige Ebene verstanden, in welcher ebenfalls der Durchstoßpunkt der optischen Achse der Kamera durch die Außenfläche liegt, welche sich jedoch senkrecht zur ersten Referenzebene erstreckt.

Die Innenfläche kann insbesondere außerdem in wenigstens einer sich senkrecht zur ersten Referenzebene erstreckenden zweiten Referenzebene zumindest teilweise gekrümmt sein, insbesondere über den gesamten optisch wirksamen Bereich in dieser zweiten Referenzebene, wobei die Krümmung der Innenfläche in dieser zweiten Referenzebene vorzugsweise durch eine vierte Schar von in der zweiten Referenzebene liegenden, vierten Krümmungskreisen mit jeweils einem vierten Krümmungsmittelpunkt und einem vierten Krümmungsradius definiert ist.

Dabei ist wenigstens ein Krümmungsradius in der ersten Referenzebene und/oder der zweiten Referenzebene kleiner als 100 mm, 90 mm, 80 mm, 70 mm, 60 mm, 50 mm, 40 mm, 30 mm oder 20 mm, jedoch vorzugsweise größer oder gleich 5 mm, 10 mm, 15 mm, 20 mm, oder 25 mm. Hierdurch lässt sich eine Kameraanordnung bereitstellen, welche sich zur Anordnung in Bereichen eignet, in welchen eine Abdeckung mit einem relativ kleinen Krümmungsradius erforderlich ist, beispielsweise in abgerundeten Ecken oder in geschwungenen oder gekrümmten Bereichen.

In einer besonders vorteilhaften Ausgestaltung einer Kameraanordnung gemäß der vorliegenden Erfindung ist wenigstens ein erster Krümmungsradius und/oder ein zweiter Krümmungsradius in der ersten Referenzebene kleiner als 100 mm, 90 mm, 80 mm, 70 mm, 60 mm, 50 mm, 40 mm, 30 mm oder 20 mm, vorzugsweise jedoch größer oder gleich 5 mm, 10 mm, 15 mm, 20 mm, oder 25 mm. Es hat sich gezeigt, dass mit einer in der ersten Referenzebene derart gewählten Krümmung in vielen Fällen eine qualitativ besonders gute optische Erfassung der Bildinformation mit einer gekrümmten Abdeckung erreichen lässt, insbesondere ein geringer Kontrastverlust.

Bezogen auf eine Anordnung in einem zweispurigen Fahrzeug und einem zugehörigen Fahrzeugkoordinatensystem nach DIN ISO 8855 mit seinem Koordinatenursprung in Fahrzeugmitte auf Höhe der Vorderachse, nach vorne gerichteter X-Achse und nach oben gerichteter Z-Achse ist die Abdeckung einer erfindungsgemäßen Kameraanordnung bzw. eine erfindungsgemäße Kameraanordnung insbesondere in Y-Richtung und/oder Z-Richtung gekrümmt, insbesondere in wenigstens einer X-Y-Ebene und/oder in einer X-Z-Ebene. Vorzugsweise ist die erste Referenzebene eine X-Y-Ebene, wobei die erste Referenzebene insbesondere diejenige X-Y-Ebene ist, in welcher der Durchstoßpunkt der optischen Achse der Kamera durch die Außenfläche liegt. Vorzugsweise ist die zweite Referenzebene eine X-Z-Ebene, wobei die zweite Referenzebene insbesondere diejenige X-Z-Ebene ist, in welcher der Durchstoßpunkt der optischen Achse der Kamera durch die Außenfläche liegt, wobei die zweite Referenzebene senkrecht auf der ersten Referenzebene steht.

Die Abdeckung kann aber auch nur in einer Richtung gekrümmt sein. In vielen Fällen ist insbesondere eine Abdeckung vorteilhaft, welche beispielsweise nur in einer X-Y-Ebene, insbesondere nur in der ersten Referenzebene gekrümmt ist, welche jedoch keine Krümmung in der zweiten Referenzebene, insbesondere nicht in einer X-Z-Ebene aufweist.

In einer weiteren möglichen und vorteilhaften Ausgestaltung einer Kameraanordnung gemäß der vorliegenden Erfindung ist die Abdeckung derart ausgestaltet, dass wenigstens in der ersten Referenzebene an den Durchstoßpunkten der optischen Achse der Kamera durch die Abdeckung, d.h. am Durchstoßpunkt durch die Außenfläche und am Durchstoßpunkt durch die Innenfläche, die Krümmung der Außenfläche und die Krümmung der Innenfläche voneinander verschieden sind. Es hat sich gezeigt, dass mit einer in der ersten Referenzebene derart gewählten Krümmung in vielen Fällen eine qualitativ besonders gute optische Erfassung der Bildinformation mit einer gekrümmten Abdeckung erreichen lässt, insbesondere ein geringer Kontrastverlust.

In einer weiteren möglichen und vorteilhaften Ausgestaltung einer Kameraanordnung gemäß der vorliegenden Erfindung ist die Abdeckung bevorzugt derart ausgestaltet, dass der erste Krümmungsradius des ersten Krümmungskreises, der die Krümmung der Außenfläche am Durchstoßpunkt durch die Außenfläche in der ersten Referenzebene definiert, und der zweite Krümmungsradius des zweiten Krümmungskreises, der die zugehörige Krümmung der Innenfläche in der ersten Referenzebene definiert, entlang einer gemeinsamen Mittelpunktgeraden verlaufen, wobei der zweite Mittelpunkt des zweiten Krümmungskreises bevorzugt um die Wandstärke der Abdeckung am Durchstoßpunkt der optischen Achse der Kamera durch die Außenfläche gegenüber dem ersten Mittelpunkt entlang der Mittelpunktgeraden nach innen versetzt ist. Es hat sich gezeigt, dass mit einer in der ersten Referenzebene derart gewählten Krümmung in vielen Fällen eine qualitativ besonders gute optische Erfassung der Bildinformation mit einer gekrümmten Abdeckung erreichen lässt.

Die "Mittelpunktgerade" ist dabei insbesondere diejenige Gerade, welche die optische Achse der Kamera im Durchstoßpunkt schneidet und insbesondere in einem definierten Winkel zur in die erste Referenzebene projizierten optischen Achse der Kamera verläuft.

Die "Wandstärke" der Abdeckung am Durchstoßpunkt der optischen Achse der Kamera durch die Außenfläche ist dabei die Dicke der Wandung der Abdeckung in diesem Punkt bzw. die Soll-Wandstärke in diesem Punkt in der ersten Referenzebene, gemessen senkrecht zu einer Tangente im Durchstoßpunkt, d.h. in einer Richtung senkrecht zu einer Tangente im Durchstoßpunkt.

In einer weiteren möglichen und vorteilhaften Ausgestaltung einer Kameraanordnung gemäß der vorliegenden Erfindung ist die Abdeckung im Bereich des Durchstoßpunktes der optischen Achse der Kamera durch die Außenfläche in der ersten Referenzebene derart gekrümmt, dass zumindest näherungsweise gilt:

$$R2 = \frac{R1 - (n-1)/d}{n},$$

wobei $R1$ der erste Krümmungsradius des ersten Krümmungskreises ist, welcher die Krümmung der Außenfläche in der ersten Referenzebene definiert, wobei $R2$ der zweite Krümmungsradius des zweiten Krümmungskreises ist, welcher die Krümmung der Innenfläche in der ersten Referenzebene definiert, wobei $n$ ein optischer Index, insbesondere der Brechungsindex, der Abdeckung im Bereich des Durchstoßpunktes der optischen Achse der Kamera durch die Außenfläche ist, und wobei $d$ die Wandstärke der Abdeckung an diesem Durchstoßpunkt ist.

Unter "zumindest näherungsweise" wird im Sinne der vorliegenden Erfindung ein Wert verstanden, welcher höchstens ±10% vom Sollwert, vorzugsweise höchstens ±5% vom Sollwert abweicht.

Sind die Krümmungsradien von Innen- und Außenfläche derart aufeinander abgestimmt, lässt sich fast die maximale Brennweite der Abdeckung erreichen, wodurch eine Minimierung von Streuungsfehlern bzw. Abbildungsfehlern erreicht werden kann und damit eine besonders gute optische Abbildung und eine möglichst geringe, unerwünschte optische Beeinflussung.

In einer besonders bevorzugten Ausgestaltung einer Kameraanordnung der vorliegenden Erfindung ist die Krümmung der Außenfläche und/oder der Innenfläche im optisch wirksamen Bereich in der ersten Referenzebene jeweils konstant. D.h. alle ersten Krümmungskreise in der ersten Referenzebene weisen denselben ersten Krümmungskreis-Mittelpunkt sowie dieselben ersten Krümmungsradien auf bzw. alle zweiten Krümmungskreise denselben zweiten Krümmungskreis-Mittelpunkt sowie dieselben zweiten Krümmungsradien.

Die Krümmung der Außenfläche und/oder der Innenfläche kann im optisch wirksamen Bereich in der ersten Referenzebene alternativ auch unterschiedlich sein.

Besonders bevorzugt ist der zweite Krümmungsradius zumindest am Durchstoßpunkt der optischen Achse der Kamera in der ersten Referenzebene durch die Innenfläche kleiner als der erste Krümmungsradius am zugehörigen Durchstoßpunkt durch die Außenfläche, wobei vorzugsweise der zweite Krümmungsradius stets, d.h. an allen Punkten in der ersten Referenzebene im optisch wirksamen Bereich, kleiner als ein zugehöriger erster Krümmungsradius an diesen Punkten ist.

Lässt sich die bei der Bilderfassung entstehende optische Beeinflussung der Lichtstrahlen, welche die zu erfassende Bildinformation enthalten, insbesondere die beim Durchdringen der Abdeckung entstehende optische Beeinflussung, durch die Anpassung der Krümmung der Abdeckung nicht ausreichend reduzieren bzw. kompensieren bzw. unter den definierten Grenzwert bringen, kann eine Kameraanordnung gemäß der vorliegenden Erfindung ein oder mehrere weitere Mittel zur Verringerung der optischen Beeinflussung aufweisen, insbesondere ein oder mehrere im Strahlengang entsprechend angeordnete optische Elemente, wie beispielsweise eine oder mehrere im Strahlengang entsprechend angeordnete Linsen, ein oder mehrere weitere, insbesondere entsprechend angepasste, bevorzugt diesbezüglich optimierte Abdeckungen, und/oder ein oder mehrere softwarebasierte Kompensationseinrichtung oder eine Kombination aus den vorgenannten, weiteren Mitteln.

Unter einer "softwarebasierten Kompensationseinrichtung" wird in diesem Zusammenhang eine Kompensationseinrichtung verstanden, welche dazu ausgebildet ist, die auftretende entstehende optische Beeinflussung zumindest teilweise rechnerisch zu reduzieren oder zu kompensieren.

Ein oder mehrere Mittel zur Verringerung der optischen Beeinflussung können dabei insbesondere in die Kamera integriert sein. Beispielsweise können ein oder mehrere Mittel wie beispielsweise ein oder mehrere zu diesem Zweck ausgebildete Linsen und/oder ein oder mehrere softwarebasierte Kompensationseinrichtungen in die Kamera integriert sein. Alternativ können einer oder mehrere Mittel zur Verringerung der optischen Beeinflussung aber auch separat vor der Kamera ausgebildet sein bzw. außerhalb der Kamera angeordnet sein. Entsprechende optische Elemente zu diesem Zweck sind bevorzugt im Strahlengang zwischen der Abdeckung und der Kamera im Kamerasichtfeld angeordnet.

Bevorzugt sind sämtliche Mittel einer Kameraanordnung gemäß der vorliegenden Erfindung dabei derart aufeinander abgestimmt, dass im Ergebnis die optische Beeinflussung innerhalb eines definierten Bereichs liegt. Beispielsweise derart, dass ein Kontrast, welcher mithilfe der sogenannten Modulationsübertragungsfunktion (MTF) bestimmt wird, bei 50 Linienpaaren pro Millimeter (lp/mm) wenigstens 30%, 40%, 50%, 60% oder 70% beträgt, höchstens jedoch 100%, bzw. ein entsprechender Kontrastverlust weniger als 70%, 60%, 50%, 40% oder weniger als 30% beträgt, jedoch nicht weniger als 0%, d.h. dass für bis zu 50 lp/mm der Kontrast stets mindestens 30%, 40%, 50%, 60% oder 70% beträgt bzw. ein entsprechender Kontrastverlust für bis zu 50 lp/mm stets geringer ist als 70%, 60%, 50%, 40% oder 30%.

Ein erfindungsgemäßes Verfahren zur Auslegung einer Krümmung einer Abdeckung für eine erfindungsgemäße Kameraanordnung, um zu erreichen, dass eine Krümmung der Außenfläche und eine Krümmung der Innenfläche der Abdeckung im optisch wirksamen Bereich derart aufeinander abgestimmt sind und die Abdeckung derart relativ zur Kamera angeordnet ist, dass eine unerwünschte optische Beeinflussung, der die Bildinformation repräsentierenden Lichtstrahlen, welche die Abdeckung bei einer Erfassung einer Bildinformation aus der Umgebung durchdringen, innerhalb eines definierten Bereichs liegt, umfasst die folgenden Schritte:

a) Definieren der Soll-Position und Soll-Orientierung der Abdeckung, insbesondere in einem definierten Bezugskoordinatensystem,
b) Definieren der Soll-Position und Soll-Orientierung der Kamera, insbesondere relativ zur Abdeckung oder absolut im Bezugskoordinatensystem,
c) Ermitteln des Durchstoßpunktes der optischen Achse der Kamera durch die Außenfläche oder die Innenfläche der Abdeckung,
d) Ermitteln der Krümmung der jeweiligen Fläche im zugehörigen, ermittelten Durchstoßpunkt der optischen Achse der Kamera in einer ausgewählten Referenzebene, insbesondere in der ersten Referenzebene oder der zweiten Referenzebene, wobei der Mittelpunkt und der Radius des zugehörigen, die Krümmung in der ausgewählten Referenzebene am Durchstoßpunkt definierenden Krümmungskreises ermittelt werden, und
e) Anpassen der Krümmung der anderen Fläche der Abdeckung an die in Schritt d) ermittelte Krümmung im Durchstoßpunkt der optischen Achse durch die andere Fläche in der ausgewählten Referenzebene, sodass eine unerwünschte optische Beeinflussung, der die Bildinformation repräsentierenden Lichtstrahlen, welche die Abdeckung bei einer Erfassung einer Bildinformation aus der Umgebung mittels der Kamera durchdringen, innerhalb eines definierten Bereichs liegt.

Das erfindungsgemäße Verfahren ist besonders bevorzugt ein computerimplementiertes Verfahren.

Durch die Anpassung der Krümmungen der Außenfläche und der Innenfläche aneinander gemäß eines erfindungsgemäßen Verfahrens kann eine unerwünschte optische Beeinflussung durch die Abdeckung reduziert werden und es lässt sich eine Kameraanordnung bereitstellen, welche auch mit einer gekrümmten Abdeckung eine ausreichend gute Erfassung der Bildinformation ermöglicht.

Bei einer vorteilhaften Ausführung eines erfindungsgemäßen Verfahrens wird in Schritt e) die Krümmung der Innenfläche an die Krümmung der Außenfläche angepasst, wenn in Schritt d) die Krümmung am Durchstoßpunkt der Außerfläche ermittelt worden ist, oder in Schritt e) die Krümmung der Außenfläche angepasst, wenn in Schritt d) die Krümmung am Durchstoßpunkt der Innenfläche ermittelt worden ist.

Dabei wird bevorzugt jeweils die Krümmung der anderen Fläche in der ausgewählten Referenzebene angepasst, insbesondere die Krümmung der Innenfläche an die Krümmung der Außenfläche oder die Krümmung der Außenfläche an die Krümmung der Innenfläche, indem wenigstens der Mittelpunkt des zugehörigen, die gesuchte Krümmung definierenden Krümmungskreises in Abhängigkeit von der in Schritt d) ermittelten Krümmung und wenigstens in Abhängigkeit von einer Wandstärke der Abdeckung bestimmt wird, und/oder wenigstens der Radius des zugehörigen, die gesuchte Krümmung definierenden Krümmungskreises wenigstens in Abhängigkeit von der in Schritt d) ermittelten Krümmung bestimmt wird, insbesondere in Abhängigkeit von dem in Schritt d) ermittelten Krümmungsradius, sowie ferner in Abhängigkeit von der Wandstärke der Abdeckung der optischen Achse und/oder dem optischen Index (Brechungsindex) der Abdeckung.

Besonders bevorzugt wird der Mittelpunkt des zugehörigen, die gesuchte Krümmung definierenden Krümmungskreises bestimmt, indem der Punkt ermittelt wird, der sich ergibt, wenn der in Schritt d) bestimmte Mittelpunkt des Krümmungskreises in der zugehörigen Referenzebene (Ebene des Krümmungskreises) entlang einer Mittelpunktgeraden, welche durch den Durchstoßpunkt und den Mittelpunkt des Krümmungskreises aus Schritt d) verläuft, um den Betrag der gewünschten Wandstärke der Abdeckung am Durchstoßpunkt der optischen Achse der Kamera durch die Außenfläche in Richtung der Abdeckung (quasi "in die Abdeckung hinein") bzw. nach innen verschoben wird.

Der Radius des zugehörigen, die gesuchte Krümmung der anderen Fläche definierenden Krümmungskreises kann bestimmt werden, indem der gesuchte Radius gleich dem in Schritt d) ermittelten Radius des Krümmungskreises gewählt wird oder indem der gesuchte Radius in Abhängigkeit von dem in Schritt d) ermittelten Krümmungsradius, der gewünschten Wandstärke der Abdeckung am Durchstoßpunkt der optischen Achse in der Referezebene und dem optischen Index (Brechungsindex) bestimmt wird.

Bei einer besonders vorteilhaften und bevorzugten Ausführung eines erfindungsgemäßen Verfahrens zur Auslegung einer Krümmung der Abdeckung erfolgt das Anpassen der Krümmung der anderen Fläche in der ausgewählten Referezebene gemäß Schritt e), insbesondere das Anpassen der Krümmung der Innenfläche an die Krümmung der Außenfläche oder der Krümmung der Außenfläche an die Krümmung der Innenfläche, indem insbesondere die folgenden Schritte durchgeführt werden:

e1) Ermitteln der Wandstärke der Abdeckung, insbesondere am in Schritt c) ermittelten Durchstoßpunkt,
e2) Bestimmen des Mittelpunkts des zugehörigen, gesuchten Krümmungskreises in Abhängigkeit von dem in Schritt d) ermittelten Mittelpunkt des die Krümmung im Durchstoßpunkt definierenden Krümmungskreises sowie in Abhängigkeit von der Wandstärke der Abdeckung am Durchstoßpunkt durch Ermitteln des Punktes, der sich ergibt, wenn der in Schritt d) bestimmte Mittelpunkt des Krümmungskreises in der zugehörigen Referezebene entlang einer Mittelpunktgeraden, welche durch den Durchstoßpunkt und den Mittelpunkt des Krümmungskreises aus Schritt d) verläuft, um den Betrag der Wandstärke der Abdeckung am Durchstoßpunkt in senkrechter Richtung entlang der Mittelpunktgeraden nach innen bzw. nach außen verschoben wird,
e3) Ermitteln eines optischen Indexes der Abdeckung, insbesondere des Brechungsindex der Abdeckung, insbesondere am in Schritt c) ermittelten Durchstoßpunkt oder in einem Bereich um diesen herum, und
e4) Bestimmen des Radius des zugehörigen, die gesuchte Krümmung der anderen Fläche definierenden Krümmungskreises in Abhängigkeit von dem in Schritt d) ermittelten Krümmungsradius, der gewünschten Wandstärke der Abdeckung am Durchstoßpunkt der optischen Achse in der Referezebene und dem optischen Index, insbesondere dem Brechungsindex, derart, dass die folgende Beziehung zumindest näherungsweise erfüllt ist:

$$R2 = \frac{R1 - (n-1)/d}{n},$$

wobei die ausgewählte Referezebene insbesondere die erste Referezebene ist, wobei R1 insbesondere der erste Krümmungsradius des ersten Krümmungskreises ist, welcher die Krümmung der Außenfläche in der ausgewählten Referezebene definiert, wobei R2 der zweite Krümmungsradius des zweiten Krümmungskreises ist, welcher die Krümmung der Innenfläche in der ausgewählten Referenzebene definiert, wobei n ein optischer Index der Abdeckung im Bereich des Durchstoßpunktes der optischen Achse der Kamera durch die Außenfläche ist, und wobei d die Wandstärke der Abdeckung in diesem Bereich ist.

Hierdurch lässt sich auf besonders einfache Art und Weise eine besonders vorteilhafte Auslegung der Krümmung der Abdeckung erreichen, mit der sich insbesondere auch mit einer gekrümmten Abdeckung eine nur geringe unerwünschte optische Beeinflussung der Bildinformation bei der Erfassung durch die Kamera realisieren lässt.

Falls erforderlich, können die einzelnen Verfahrensschritte zur Anpassung bzw. Auslegung der Krümmung der Abdeckung insbesondere wenigstens ein weiteres Mal zur Auslegung der Krümmung in der zweiten Referezebene oder einer oder mehreren weiteren Referenzebenen wiederholt werden.

Eine erfindungsgemäße Abdeckung für eine Kameraanordnung ist dadurch gekennzeichnet, dass sie für eine erfindungsgemäße Kameraanordnung ausgebildet ist und/oder eine Krümmung der Abdeckung mit einem erfindungsgemäßen Verfahren ausgelegt worden ist.

Eine erfindungsgemäße Vorrichtung ist dadurch gekennzeichnet, dass sie Mittel zur Durchführung eines erfindungsgemäßen Verfahrens aufweist und zur Durchführung eines erfindungsgemäßen Verfahrens ausgebildet und eingerichtet ist.

Ein erfindungsgemäßes Computerprogramm ist dadurch gekennzeichnet, dass es Anweisungen umfasst, die, wenn das Programm von einem Computer ausgeführt wird, den Computer veranlassen, ein erfindungsgemäßes Verfahren auszuführen.

Ein erfindungsgemäßes computerlesbares Speichermedium mit darauf gespeicherten Befehlen ist dadurch gekennzeichnet, dass es Befehle umfasst, die, wenn die Befehle von einem Computer ausgeführt werden, den Computer veranlassen, ein erfindungsgemäßes Verfahren auszuführen.

Die mit Bezug auf eine erfindungsgemäße Kameraanordnung vorgestellten, vorteilhaften und möglichen Ausgestaltungen und deren Vorteile gelten dabei grundsätzlich - um Wiederholungen zu vermeiden - selbst wenn sie nur einmal im Zusammenhang mit der Kameraanordnung beschrieben sind, nicht nur für eine erfindungsgemäße Kameraanordnung, sondern auch entsprechend für ein erfindungsgemäßes Verfahren zur Auslegung einer Krümmung einer Abdeckung für eine Kameraanordnung, für eine erfindungsgemäße Abdeckung für eine Kameraanordnung, für eine erfindungsgemäße Vorrichtung, für ein erfindungsgemäßes Computerprogramm sowie für ein erfindungsgemäßes, computerlesbares Speichermedium und umgekehrt.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren gezeigten Merkmale und Merkmalskombinationen sind nicht nur in der jeweils angegebenen Kombination, sondern auch in anderen Kombinationen oder aber in Alleinstellung verwendbar, sofern die Kombination jeweils technisch sinnvoll und ausführbar ist.

Die Erfindung wird nun anhand bevorzugter, jedoch nicht einschränkender Ausführungsbeispiele sowie unter Bezugnahme auf die beigefügten Zeichnungen näher erläutert, wobei funktionsgleiche Bauteile mit den gleichen Bezugszeichen versehen sind.

Es zeigen:

Fig. 1    in Draufsicht einen Schnitt durch ein erstes Ausführungsbeispiel einer erfindungsgemäßen Kameraanordnung mit einer erfindungsgemäßen Abdeckung,

Fig. 2    ein von der Kameraanordnung aus Fig. 1 ohne Abdeckung erfasstes Bild eines Gitters,

Fig. 3    ein von der Kameraanordnung aus Fig. 1 mit einer nicht erfindungsgemäßen Abdeckung anstelle einer erfindungsgemäß ausgebildeten Abdeckung erfasstes Bild des Gitters aus Fig. 2,

Fig. 4    eine Schar von Kontrastübertragungsfunktionen der Kameraanordnung aus Fig. 1 ohne Abdeckung,

Fig. 5    eine Schar von Kontrastübertragungsfunktionen der Kameraanordnung aus Fig. 1 mit einer nicht erfindungsgemäßen Abdeckung anstelle einer erfindungsgemäß ausgebildeten Abdeckung,

Fig. 6    eine Prinzipdarstellung zur Erläuterung der Begriffe Tangential- und Sagittalebene,

Fig. 7    eine Prinzipskizze zur Erläuterung der grundsätzlichen Anordnungs- und Ausgestaltungsmöglichkeiten von Kamera und Abdeckung einer erfindungsgemäßen Kameraanordnung relativ zueinander, wobei die Kameraanordnung in Draufsicht auf eine erste Referenzebene gezeigt ist,

Fig. 8    eine weitere Prinzipskizze zur Erläuterung der grundsätzlichen Anordnungs- und Ausgestaltungsmöglichkeiten von Kamera und Abdeckung einer erfindungsgemäßen Kameraanordnung relativ zueinander, wobei die Kameraanordnung in Seitenansicht mit Blick auf eine zweite Referenzebene gezeigt ist,

Fig. 9    eine Prinzipskizze zur Erläuterung eines erfindungsgemäßen Verfahrens zur Auslegung der Krümmung einer erfindungsgemäßen Abdeckung für eine erfindungsgemäßen Kameraanordnung, wobei die Kameraanordnung in Draufsicht auf eine erste Referenzebene gezeigt ist, und

Fig. 10   Kurvenverläufe verschiedener, resultierenden Kontrastübertragungsfunktionen einer Kameraanordnung mit einer erfindungsgemäß ausgelegten Krümmung der Abdeckung für verschiedene Winkel zwischen der optische Achse der Kamera und der Abdeckung im optisch wirksamen Bereich für verschiedene Blickwinkel der Kamera innerhalb des Kamerasichtfeldes.

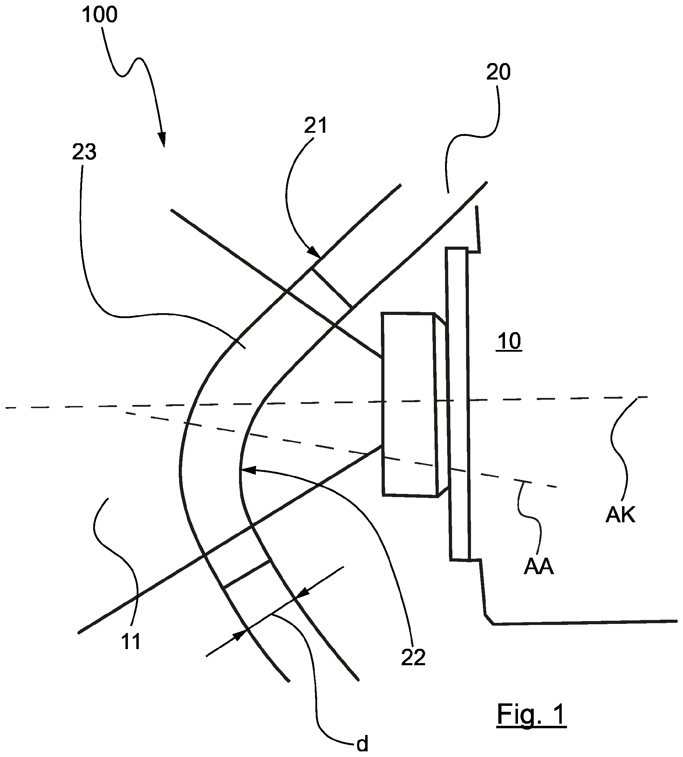

**Fig. 1** zeigt in Draufsicht einen Schnitt durch ein erstes Ausführungsbeispiel einer erfindungsgemäßen Kameraanordnung 100 mit einer Kamera 10 sowie einer erfindungsgemäßen Abdeckung 20, wobei die Kameraanordnung 100 für ein Fahrzeug ausgebildet ist, insbesondere für einen Innenraum eines Fahrzeugs.

Die Kamera 10 weist eine optische Achse AK sowie ein Kamerasichtfeld 11 zur optischen Erfassung wenigstens einer Bildinformation einer Umgebung auf und ist bei diesem Ausführungsbeispiel eine Kamera 10 mit fester Brennweite, d.h. nicht verstellbarer Brennweite. Ferner ist die Kamera 10 nur für eine ortsfeste Befestigung ausgebildet, d.h. eine in ihrer Position nicht veränderliche Befestigung. Dies ermöglicht die Bereitstellung einer einfach aufgebauten und damit kostengünstigen und wartungsarmen Kameraanordnung 100, welche keine entsprechenden Verstellmechanismen benötigt.

Die Abdeckung 20 ist eine flächige, aus Kunststoff hergestellte Abdeckung 20 mit einer Außenfläche 21 sowie einer Innenfläche 22 und mit einem optisch wirksamen Bereich 23, in welchem die Abdeckung 20 zumindest teilweise lichtdurchlässig ist und zur optischen Erfassung einer Bildinformation aus der Umgebung von zugehörigen, die Bildinformation repräsentierenden Lichtstrahlen zumindest teilweise durchdrungen werden kann.

Wie anhand von Fig. 1 gut erkennbar ist, ist die Abdeckung 20 dabei derart angeordnet, dass sie mit ihrem optisch wirksamen Bereich 23 in das Kamerasichtfeld 11 ragt und das Sichtfeld 11 der Kamera 10 abdeckt, wobei die Abdeckung 20 derart relativ zur Kamera 10 angeordnet ist, dass sich die Außenfläche 21 der Abdeckung 20 auf einer von der Kamera 10 abgewandten Seite befindet und die Innenfläche 21 der Abdeckung 20 auf einer der Kamera 10 zugewandten Seite. Bei dem in Fig. 1 gezeigten Beispiel einer erfindungsgemäßen Kameraanordnung 100 wird das Kamerasichtfeld 11 dabei vollständig von der Abdeckung 20 abgedeckt bzw. überdeckt. Durch eine derartige Anordnung kann auf einfache Art und Weise die Kamera 10 verborgen werden und ein besonders optisch ansprechendes Design im Innenraum des Fahrzeugs realisiert werden.

Bei der Kameraanordnung 100 aus Fig. 1 ist die Abdeckung 20 dabei in ihrem optisch wirksamen Bereich 23 der Abdeckung 20 zumindest abschnittsweise gekrümmt, wobei die Außenfläche 21 und die Innenfläche 22 der Abdeckung 20 jeweils wenigstens abschnittsweise gekrümmt sind. Die Außenfläche 21 ist dabei konvex gekrümmt und die Innenfläche 22 annähernd, aber nur annähernd, parallel zu dieser und konkav.

Die Kamera 10 ist bei der Kameraanordnung 100 aus Fig. 1 dabei derart relativ zur Abdeckung 20 angeordnet, dass die optische Achse AK der Kamera 10 in einem Winkel zur optischen Achse AA der Abdeckung 20 verläuft und nicht mit dieser fluchtet. Ferner ist die Kamera 10 derart relativ zur Abdeckung 20 angeordnet und die Abdeckung 20 derart gekrümmt, dass die optische Achse AK der Kamera 10 die Außenfläche 21 sowie die Innenfläche 22 der Abdeckung 20 nicht senkrecht durchstößt, sondern in einem Winkel zur Senkrechten.

Eine derartige Anordnung der Kamera 10 relativ zur einer Abdeckung 20 mit einer derart gekrümmten Außenfläche 21 führt in der Regel zu großen Abbildungsfehlern, insbesondere zu einem hohen Kontrastverlust. Bei vorliegendem Ausführungsbeispiel beträgt der Krümmungsradius der Außenfläche 21 im optisch wirksamen Bereich 23 beispielsweise an allen Punkten weniger als 100 mm, teilweise sogar weniger als 70 mm, an einigen Stellen insbesondere teilweise sogar nur 20 mm.

Um die durch die Krümmung der Außenfläche 21 hervorgerufene, unerwünschte optische Beeinflussung, insbesondere einen hierdurch entstehenden Kontrastverlust beim Durchdringen der Lichtstrahlen durch die Abdeckung 20 zu verringern, insbesondere soweit zu reduzieren, dass wenigstens eine Größe, die eine unerwünschte optische Beeinflussung charakterisiert, in diesem Fall ein Kontrastverlust bzw. ein erforderlicher Mindest-Kontrast, innerhalb eines definierten Bereichs liegt, sind erfindungsgemäß die Krümmung der Außenfläche 21 und die Krümmung der Innenfläche 22 im optisch wirksamen Bereich 23 in Abhängigkeit von der Kameraposition relativ zur Abdeckung 20 entsprechend ausgelegt und aufeinander abgestimmt.

Durch die erfindungsgemäße Abstimmung der Krümmungen von Außenfläche 21 und Innenfläche 22, insbesondere durch die erfindungsgemäße Anpassung der Krümmung der Innenfläche 22 an die Krümmung der Außenfläche 21 im optisch wirksamen Bereich 23 in Abhängigkeit von der Kameraposition können die durch die Krümmung der Außenfläche 21 beim Durchdringen der Abdeckung 20 entstehenden Abbildungsfehler, bei dem gezeigten Ausführungsbeispiel insbesondere der dabei entstehende Kontrastverlust, soweit reduziert werden, dass eine für die weitere Verarbeitung der erfassten Bildinformation zur Müdigkeitserkennung ausreichende Bildinformationserfassungsqualität erreicht werden kann. Insbesondere kann durch die erfindungsgemäße Ausgestaltung der Krümmung der Abdeckung 20 in Abhängigkeit von der Kameraposition erreicht werden, dass der Kontrastverlust einen zulässigen Grenzwert nicht überschreitet bzw. innerhalb eines definierten Bereichs liegt bzw. ein erforderlicher Rest-Kontrast für eine ausreichende optische Erfassungsqualität stets erreicht wird.

Die vorliegende Erfindung ermöglicht somit eine besonders flexible Positionierung der Kamera 10 im Innenraum eines Fahrzeugs auch bei einer verborgenen Anordnung der Kamera 10 hinter einer Absenkung 20 mit einer stark ausgeprägten Krümmung.

Bei dem vorliegenden Beispiel kann mittels der erfindungsgemäßen Anpassung der Krümmung der Innenfläche 22 an die Krümmung der Außenfläche 21 in Abhängigkeit von der Kameraposition beispielsweise erreicht werden, dass in der zugehörigen Tangentialebene sowie der zugehörigen Sagittalebene ein Kontrastverlust bei 50 Linienpaaren pro Millimeter (lp/mm) nicht mehr als 60 % beträgt bzw. stets in einem Bereich von 0% bis 60% liegt bzw. d.h. dass ein Rest-Kontrast bei 50 lp/mm mindestens 40 % beträgt bzw. stets in einem Bereich von 100% bis 40% liegt, wobei der Kontrastverlust bzw. der Rest-Kontrast gemäß der sogenannten Kontrastübertragungsfunktionen bzw. der sogenannten Modulationsübertragungsfunktion (MTF) ermittelt wird. Für weitere Informationen zur MTF und wie mithilfe dieser beispielsweise ein Kontrastverlust ermittelt werden kann, wird auf gängige Literatur aus der Optik verwiesen.

Ist wie im vorliegenden Fall die Krümmung der Außenfläche 21 durch das gewünschte Design des Innenraums vorgegeben, kann durch eine Anpassung der Krümmung der Innenfläche 22, ohne dass das Design der Außenfläche 21 und damit das Design der Abdeckung 20 in einem von außen sichtbaren Bereich negativ zu beeinflussen, die durch die Krümmung der Außenfläche 21 beim Durchdringen der Abdeckung 20 hervorgerufene, unerwünschte optische Beeinflussung der Lichtstrahlen reduziert oder sogar teilweise fast vollständig kompensiert werden.

Durch die vorliegende Erfindung lässt sich eine erhebliche Verbesserung der Erfassungsqualität der Bildinformation erreichen und die unerwünschte optische Beeinflussung in einem definierten Bereich gehalten werden. Somit ermöglicht eine erfindungsgemäße Kameraanordnung 100 eine flexible Ausgestaltung der Abdeckung 20 insbesondere der Außenfläche 21, bei einer dennoch ausreichend guten optischen Erfassungsqualität der Bildinformation nach dem Durchdringen der Abdeckung 20.

Ein eine derartige Abdeckung 20, welche zum einen zwar durch ihre Ausgestaltung, in diesem Fall durch ihre Krümmung der Außenfläche 21, Abbildungsfehler erzeugt, aber diese gleichzeitig auch wieder zumindest teilweise kompensiert bzw. reduziert, in diesem Fall durch die entsprechend angepasste Krümmung der Innenfläche 22 in Abhängigkeit von der Kameraposition, ist insbesondere von Vorteil, wenn die Kamera 10 wie vorliegend einen festen Fokus, d. h. einen nicht verstellbaren Brennpunkt bzw. eine nicht verstellbare Brennweite aufweist. Denn bei einer derartigen Kamera 10 besteht keine Möglichkeit etwaige Abbildungsfehler durch eine Anpassung der Brennweite auszugleichen.

Eine entsprechend an die Kameraanordnung 100 adaptierte Abdeckung ist ebenfalls von Vorteil, wenn wie bei diesem Beispiel eine ortsfeste Kamera 10 verwendet wird, d. h. eine Kamera 10 welche während der Bilderfassung in ihrer Position unveränderlich ist, sodass nicht durch eine Änderung der Lage bzw. Orientierung der Kamera 10 relativ zur Abdeckung 20 eventuelle Abbildungsfehler korrigiert werden können.

Bei diesem Ausführungsbeispiel einer erfindungsgemäßen Kameraanordnung 100 ist die Abdeckung 20 dabei Teil eines Gehäuses, insbesondere einer Gehäusewand bzw. einer Blende, wie sie häufig in Fahrzeuginnenräumen eingesetzt wird.

Die Außenfläche 21 der Abdeckung 20 wird dabei durch die äußere Wandung der Abdeckung 20 gebildet und die Innenfläche 22 durch die innere Wandung. Ein senkrechter Abstand zwischen der Innenfläche 21 und der Außenfläche 22 definiert dabei die Wandstärke d der Abdeckung 20 in diesem Bereich.

Vorliegend ist die Abdeckung 20 dabei zumindest wie vorbeschrieben teilweise lichtdurchlässig ausgebildet, damit die Lichtstrahlen, welche die Bildinformation enthalten, die Abdeckung im optisch wirksamen Bereich 23 durchdringen können. Die Abdeckung ist bevorzugt jedoch eingefärbt, bei diesem Beispiel insbesondere grau, um die Kamera 10 hinter der Abdeckung 20 zu verbergen.

Wie vorstehend erläutert ist die Abdeckung 20 dabei insbesondere aus Kunststoff hergestellt, insbesondere im Spritzgussverfahren. Die Abdeckung 20 ist dabei einteilig ausgebildet, d. h. in einem Stück gefertigt und insbesondere aus einem einzigen Werkstoff. In einigen Fällen kann es aber durchaus vorteilhaft sein, den optisch wirksamen Bereich 23 der Abdeckung 20 aus einem anderen Werkstoff herzustellen als beispielsweise die angrenzenden Bereiche, mit denen die Abdeckung 20 insbesondere befestigt werden kann. Für besonders gute optische Eigenschaften ist die Abdeckung 20 derart ausgestaltet, dass eine Oberflächenrauhigkeit im Bereich des optisch wirksamen Bereichs 23, insbesondere sowohl eine Oberflächenrauhigkeit der Außenfläche 21 als auch eine Oberflächenrauhigkeit der Innenfläche 22, jeweils weniger als 20 µm beträgt. Insbesondere eine mittlere Rauigkeit Ra.

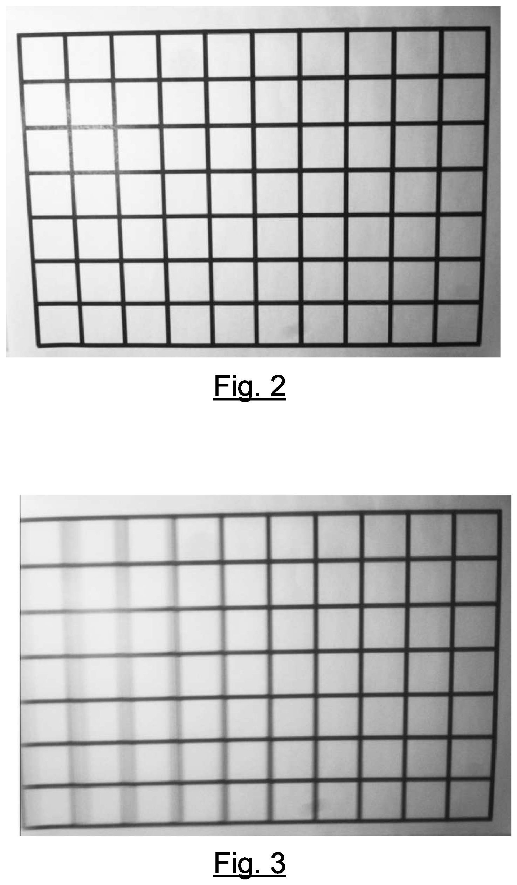

Zum besseren Verständnis der unerwünschten optischen Beeinflussung, insbesondere des Kontrastverlustes, zeigt **Fig. 2** ein von der Kameraanordnung 100 aus Fig. 1 ohne die Abdeckung 20 erfasstes Bild eines Gitters. Da keine Abdeckung 20 während der Bilderfassung vorhanden war, kam es nicht zu einer unerwünschten optischen Beeinflussung bei der Bilderfassung, insbesondere nicht zu einem Kontrastverlust.

**Fig. 3** zeigt das gleiche Gitter wie Fig. 2, jedoch ist in Fig. 3 das Gitter insbesondere in der linken Bildhälfte stark verschwommen und verzerrt. Das Bild in Fig. 3 ist ebenfalls von der Kameraanordnung 100 aus Fig. 1 erfasst worden, jedoch diesmal mit einer Abdeckung. Allerdings nicht mit einer erfindungsgemäßen Abdeckung 20, sondern anstelle dieser mit einer herkömmlichen, aus dem Stand der Technik bekannten Abdeckung, bei welcher die Krümmung der Innenfläche nicht in Abhängigkeit von der Kameraposition an die Krümmung der Außenfläche angepasst ist. Der dabei durch die nicht erfindungsgemäß angepasste Abdeckung dabei entstehende Abbildungsfehler, insbesondere der dabei entstehende Kontrastverlust, ist auf den ersten Blick und mit bloßem Auge zu erkennen.

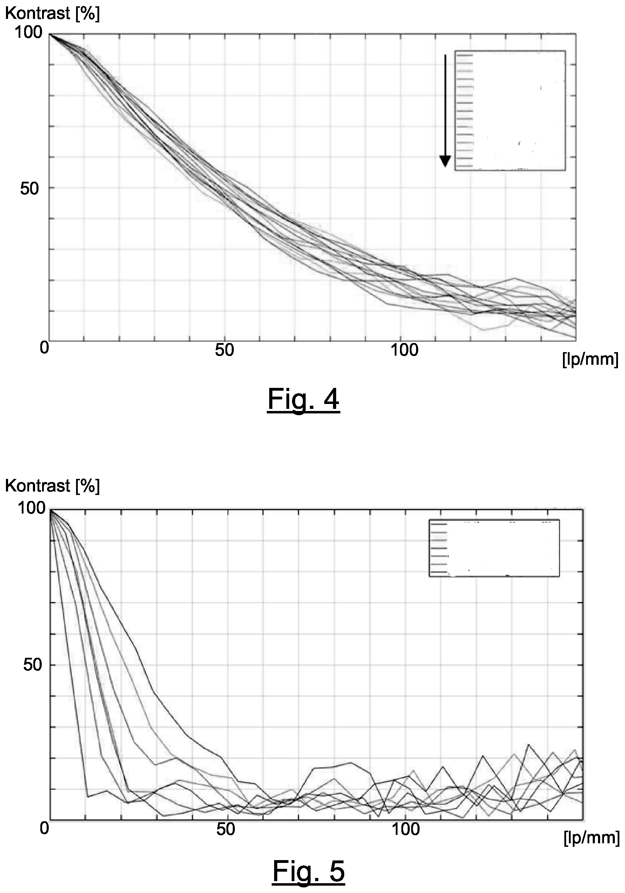

**Fig. 4** zeigt eine Schar von Kontrastübertragungsfunktionen der Kameraanordnung aus Fig. 1 ohne eine entsprechende Abdeckung, wobei jede Linie der Kurvenschar dabei einer ermittelten Kontrastübertragungsfunktion bzw. einer ermittelten Modulationsübertragungsfunktion in der Sagittalebene entspricht, insbesondere jeweils einer Messung. Dargestellt sind dabei jeweils die entsprechenden Werte der einzelnen Kontrastübertragungsfunktionen bzw. der Modulationsübertragungsfunktionen in der Sagittalebene über der Frequenz, in diesem Fall ausgedrückt durch die Anzahl der Linienpaare pro Millimeter (lp/Millimeter). D.h. die Frequenz bzw. die Liniendichte ist entlang der Abszisse aufgetragen und der Kontrast entlang der Ordinate.

Wie anhand von Fig. 4 gut erkennbar ist, nimmt der erreichbare Kontrast mit zunehmender Liniendichte stark ab, d. h. mit zunehmender Anzahl von Linienpaaren pro Millimeter (lp/mm). Dies bedeutet, dass mit zunehmender Liniendichte somit die Linien weniger scharf voneinander abgegrenzt erkennbar sind, sondern zunehmend ineinander verschwimmen. Bei einer Frequenz bzw. einer Liniendichte von 50 lp/mm beträgt ein entsprechender Rest-Kontrast nur noch 50 % bzw. der Kontrastverlust etwa 50%. Ein ähnliches Bild ergibt sich für die Tangentialebene (hier nicht dargestellt).

**Fig. 5** zeigt zum Vergleich dazu eine Schar von entsprechenden Kontrastübertragungsfunktionen, ebenfalls für die Sagittalebene, der gleichen Kameraanordnung aus Fig. 1 mit einer nicht erfindungsgemäßen Abdeckung anstelle einer erfindungsgemäß ausgebildeten Abdeckung 20, wobei jede Linie der Kurvenschar jeweils eine Abdeckung aus einer Charge von Abdeckungen repräsentiert. Es ist eindeutig erkennbar, dass diese Abdeckungen zu einem deutlich höheren Kontrastverlust bzw. einem deutlich geringeren Rest-Kontrast führen. Bei einer Liniendichte von ebenfalls 50 lp/mm beträgt der Rest-Kontrast bei allen untersuchten Abdeckungen weniger als etwa 25 %, teilweise sogar weniger als 10 %. Ein ähnliches Bild ergibt sich für die Tangentialebene (hier nicht dargestellt). Die Abweichungen zwischen den Abdeckungen sind dabei auf die bauteilbedingten Toleranzen zurückzuführen, d.h. die Bauteiltoleranzen bzw. die Fertigungstoleranzen. Optische Systeme sind diesbezüglich sehr anfällig.

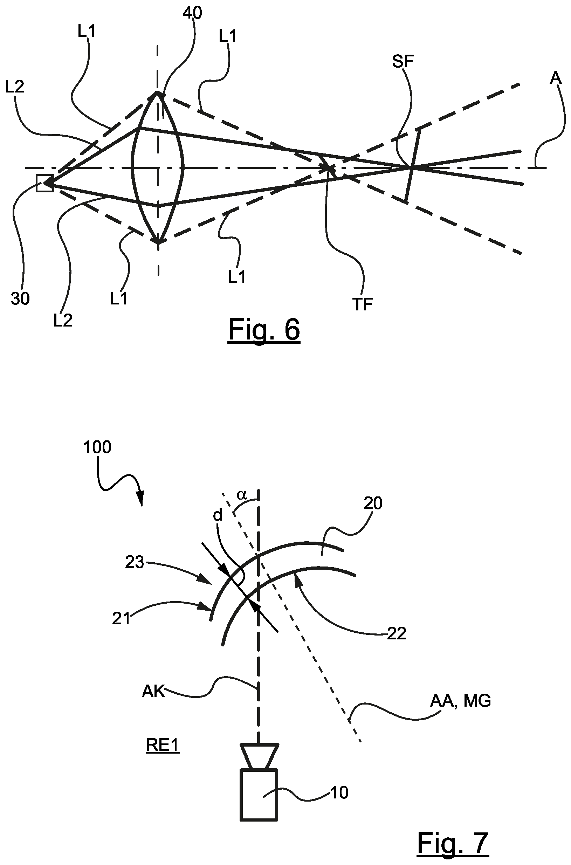

Zur Erläuterung der Begriffe Tangentialebene und Sagittalebene welche vorstehend im Zusammenhang mit den erreichbaren Kontrastwerten genannt worden sind, ist in **Fig. 6** eine Prinzipdarstellung abgebildet, welche ein grundlegendes optisches System zeigt mit einem Gegenstand bzw. einem Objekt 30, welches Lichtstrahlen L1, L2 mit einer Bildinformation an ein optisches Element 40, hier vereinfacht eine Linse 40, sendet, wobei das optische Element 40 von den Lichtstrahlen L1, L2 durchdrungen wird. Durch die optischen Eigenschaften des optischen Elements 40 kommt es zu einer optischen Beeinflussung der Lichtstrahlen L1, L2, beispielsweise durch Brechung usw.

Um die optische Beeinflussung zu erfassen, insbesondere Abbildungsfehler, gibt es verschiedene Möglichkeiten, beispielsweise die Möglichkeit, als Gegenstand 30 ein Gitter, wie in Fig. 2 gezeigt, auf der einen Seite des optischen Elements 30 zu platzieren (vgl. Fig. 6), und mit einer Bilderfassungseinrichtung auf der anderen Seite des optischen Elements 40 eine Abbildung von dem Gegenstand 30 bzw. dem Gitter 30 nach dem Durchtritt der entsprechenden Lichtstrahlen L1 und L1 durch das optische Element 40 bzw. das optische System im Strahlengang zu erfassen und auszuwerten. Anhand der Abweichung des erfassten Bildes vom realen Bild kann der Abbildungsfehler bestimmt werden.

Die vom Gegenstand bzw. Objekt 30 ausgesendeten Lichtstrahlen L1, L2 treten dabei entlang vieler verschiedener Richtungen durch das optische Element 30 bzw. ein im Strahlengang angeordnetes optisches System hindurch. Je nachdem wie die Lichtstrahlen L1, L2 dabei durch das optische System bzw. das optische Element 30 durchdringen, fällt die optische Beeinflussung aus. Die optische Beeinflussung, d.h. insbesondere die auftretenden Abbildungsfehler, sind dabei nicht nur von dem optischen Element 40, sondern auch von der Anordnung des Gegenstands bzw. Objekts 30 relativ zum optischen Element 40 abhängig.

Um vergleichbare Aussagen zwischen verschiedenen optischen Elementen 40 bzw. zwischen verschiedenen Anordnungen zu ermöglichen, hat es sich in der Optik etabliert, die optische Beeinflussung in verschiedenen Ebenen zu beurteilen und die auftretenden Abbildungsfehler insbesondere in diesen Ebenen zu bestimmen. Eine dieser Ebenen ist dabei die sogenannte Sagittalebene, in welcher die optische Achse A des optischen Elements 40 sowie das Objekt 30 liegen. Eine weitere dieser Ebenen ist die sogenannte Tangentialebene, welche senkrecht auf der Sagittalebene steht und welche ebenfalls durch das Objekt 30 verläuft.

Ist das optische Element 40 wie in Fig. 6 eine runde Linse 40 und befindet sich das Objekt 30 wie in Fig. 6 dargestellt, rechts von der optischen Achse A, aber mit der optischen Achse A auf einer Höhe, ist die Sagittalebene eine Horizontalebene, in welcher die Lichtstrahlen L2 bei Blick von oben, wie in Fig. 6 dargestellt verlaufen und im Sagittal-Brennpunkt SF zusammentreffen, wobei die Lichtstrahlen L2 beim Durchdringen des optischen Elements 40 optisch beeinflusst werden. Hierdurch entstehen Abbildungsfehler. Die Tangentialebene ist entsprechend eine Vertikalebene, in welcher die Lichtstrahlen L1 bei Blick von der Seite wie in Fig. 6 dargestellt verlaufen und im Tangential-Brennpunkt TF zusammentreffen, wobei die Lichtstrahlen L1 beim Durchdringen des optischen Elements 40 ebenfalls optisch beeinflusst werden.

Durch den unterschiedlichen Verlauf und die unterschiedlichen Ein- und Austrittswinkel am optischen Element 40 und der unterschiedlichen Länge der innerhalb des optischen Elements 40 zurückgelegten Wegstrecke, werden die Lichtstrahlen L1 und L2 unterschiedlich optisch beeinflusst und die Brennpunkte der Sagittal- und der Tangentialebene fallen nicht zusammen. Hierdurch entstehen Abbildungsfehler, da die Brennweite einer entsprechenden Kamera nicht auf beide Brennpunkte gleichzeitig optimal eingestellt werden kann. Je größer das Objekt ist, umso mehr Bereiche des Objekts werden mit Abbildungsfehlern abgebildet. Die entstehenden Abbildungsfehler sind je nach Ebene und je nach Strahlendurchgangsrichtung unterschiedlich groß. Daher werden die Abbildungsfehler in der Regel für jede dieser Ebenen getrennt angegeben.

In vielen Fällen wird zugunsten jedoch ein globaler Abbildungsfehler aus den in der Sagittalebene und der Tangentialebene ermittelten Abbildungsfehlern bestimmt.

Hierzu gibt es verschiedene Möglichkeiten. Beispielsweise kann ein Mittelwert, insbesondere ein arithmetisches Mittel des Abbildungsfehlers bzw. einer den Abbildungsfehler charakterisierenden Größe bestimmt werden, oder der jeweils schlechtere bzw. größere Wert verwendet werden.

**Fig. 7** zeigt eine entsprechende Prinzipskizze zur Erläuterung der grundsätzlichen Anordnungs-Ausgestaltungsmöglichkeiten von Kamera 10 und Abdeckung 20 einer erfindungsgemäßen Kameraanordnung 100 relativ zueinander, wobei in Fig. 7 die Kameraanordnung in 100 Draufsicht auf eine erste Referenzebene RE1 gezeigt ist. In dieser Darstellung ist gut zu erkennen, wie die optische Achse AK der Kamera 10 die Abdeckung 20 durchstößt, und die optische Achse AA der Abdeckung 20 in einem Winkel α zur optischen Achse AK der Kamera verläuft, wobei die optische Achse AK der Kamera die Abdeckung 20 nicht senkrecht durchstößt (wie die zugehörige optische Achse AA die Abdeckung 20), sondern in einem Winkel zu dieser.

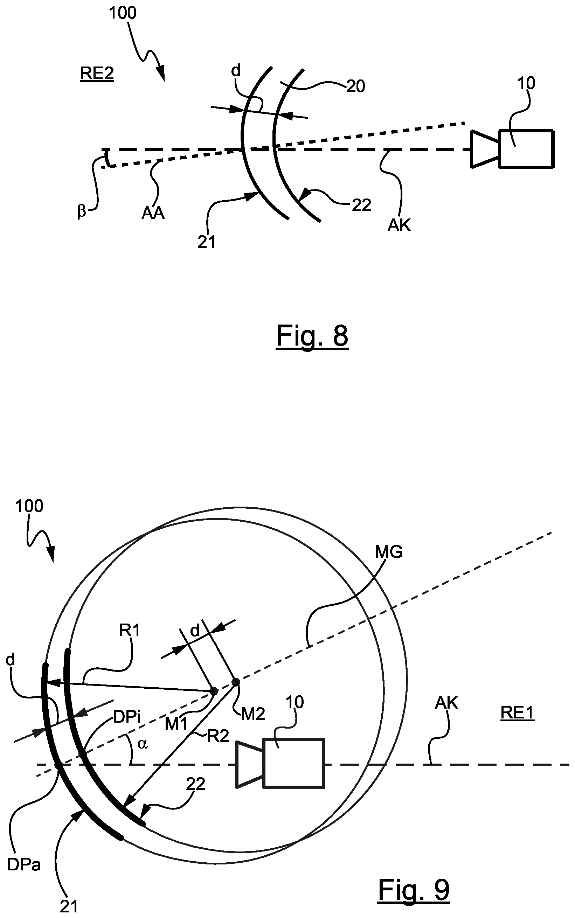

**Fig. 8** zeigt eine weitere Prinzipskizze zur Erläuterung der grundsätzlichen Anordnungs-Ausgestaltungsmöglichkeiten von Kamera 1 und Abdeckung 20 einer erfindungsgemäßen Kameraanordnung 100 relativ zueinander, wobei diese Darstellung die Kameraanordnung in 100 in Seitenansicht mit Blick auf eine zweite Referenzebene RE2 zeigt, welche senkrecht auf der ersten Referenzebene RE1 aus Fig. 7 steht. Aus der Darstellung in Fig. 8 wird deutlich, dass die Kamera 10 bzw. deren optische Achse AK auch mit einem zweiten Winkel β zur optischen Achse AA der Abdeckung 20 angeordnet sein kann und auch in der zweiten Referenzebene RE2 die Abdeckung 20 nicht senkrecht durchstoßen muss.

Eine Veränderung des Krümmung der Abdeckung 20, eine Veränderung der Position der Kamera 10 relativ zur Abdeckung 20 sowie eine Veränderung der Wandstärke d der Abdeckung 20 führen zu einer Veränderung der optischen Beeinflussung der Lichtstrahlen beim Durchdringen der Abdeckung.

Dabei nimmt mit zunehmender Krümmung, zunehmendem Winkelversatz sowie zunehmender Wandstärke, die unerwünschte optischen Beeinflussung, insbesondere ein Kontrastverlust, in der Regel zu. Um für eine Weiterverarbeitung der erfassten Bildinformationen eine ausreichende Erfassungsqualität sicherzustellen, ist es erforderlich den auftretenden Kontrastverlust innerhalb eines definierten Bereichs, d. h. innerhalb definierter Grenzen zu halten bzw. den Kontrastverlust so weit zu minimieren, dass ein zulässiger Grenzwert nicht überschritten wird bzw. stets ein mindestens erforderlicher Rest-Kontrast erreicht wird.

Dies kann dank der vorliegenden Erfindung besonders einfach erreicht werden. Und zwar, indem die Krümmung der Innenfläche 21 der Abdeckung 20 in Abhängigkeit von der Kameraposition, insbesondere zusätzlich in Abhängigkeit von der Wandstärke d der Abdeckung 20, durch ein erfindungsgemäßes Verfahren an die Krümmung der Außenfläche 21 angepasst wird bzw. umgekehrt, wobei besonders bevorzugt jedoch die Krümmung der Innenfläche 22 an die Krümmung der Außenfläche 21 angepasst wird, da die Krümmung der Außenfläche meistens durch ein gewünschtes Design vorgegeben ist.

**Fig. 9** zeigt eine Prinzipskizze zur Erläuterung eines erfindungsgemäßen Verfahrens zur Auslegung bzw. Anpassung der Krümmung einer erfindungsgemäßen Abdeckung 20 für eine erfindungsgemäßen Kameraanordnung 100, wobei die Kameraanordnung 100 in Fig. 9 in Draufsicht auf eine erste Referenzebene RE1 gezeigt ist.

Ein erfindungsgemäßes Verfahren zur Auslegung einer Krümmung der Abdeckung 20 für eine erfindungsgemäße Kameraanordnung 100, umfasst in einer besonders vorteilhaften Ausführung die folgenden Schritte:

a) Definieren der Soll-Position und Soll-Orientierung der Abdeckung 20 in einem definierten Bezugskoordinatensystem,

b) Definieren der Soll-Position und Soll-Orientierung der Kamera 10 relativ zur Abdeckung 20 oder absolut im Bezugskoordinatensystem,

c) Ermitteln des Durchstoßpunktes DPa der optischen Achse AK der Kamera 10 durch die Außenfläche 21 der Abdeckung 20,

d) Ermitteln der Krümmung der Außenfläche 21 in diesem Durchstoßpunkt DPa der optischen Achse AK der Kamera 10 in der ersten Referenzebene RE1, wobei der Mittelpunkt M1 und der Radius R1 des zugehörigen Krümmungskreises, der die Krümmung in der erste Referenzebene RE1 an diesem Durchstoßpunkt DPa definiert, ermittelt werden, und

e) Anpassen der Krümmung der Innenfläche 22 der Abdeckung 10 an die in Schritt d) ermittelte Krümmung der Außenfläche 21.

Das Anpassen der Krümmung der Innenfläche 22 an die Krümmung der Außenfläche 21 erfolgt in einer vorteilhaften Ausführung eines erfindungsgemäßen Verfahrens insbesondere, indem die folgenden Schritte durchgeführt werden:

e1) Ermitteln bzw. Bestimmen der gewünschten Wandstärke d der Abdeckung 20 am in Schritt c) ermittelten Durchstoßpunkt DPa,

e2) Bestimmen des Mittelpunkts M2 des zugehörigen, gesuchten zweiten Krümmungskreises in Abhängigkeit von dem in Schritt d) ermittelten Mittelpunkt M1 des die Krümmung im Durchstoßpunkt DPa der Außenfläche 21 definierenden Krümmungskreises sowie in Abhängigkeit von der Wandstärke d der Abdeckung 20 am Durchstoßpunkt DPa durch Ermitteln des Punktes M2, der sich ergibt, wenn der in Schritt

d) bestimmte Mittelpunkt M1 des Krümmungskreises in der ersten Referenzebene RE1 entlang einer Mittelpunktgeraden MG, welche durch den Durchstoßpunkt DPa und den Mittelpunkt M1 des Krümmungskreises aus Schritt d) verläuft, um den Betrag der Wandstärke d der Abdeckung 20 am Durchstoßpunkt DPa in senkrechter Richtung entlang der Mittelpunktgeraden MG nach innen verschoben wird,

e3) Ermitteln eines optischen Indexes n der Abdeckung, insbesondere des Brechungsindex n der Abdeckung 20, insbesondere am in Schritt c) ermittelten Durchstoßpunkt DPa oder in einem Bereich um diesen herum, und

e4) Bestimmen des Radius R2 des zugehörigen, die gesuchte Krümmung der Innenfläche 22 definierenden Krümmungskreises in Abhängigkeit von dem in Schritt d) ermittelten Krümmungsradius R1, der Wandstärke d der Abdeckung 20 am Durchstoßpunkt DPa und dem optischen Index n, derart, dass die folgende Beziehung zumindest näherungsweise erfüllt ist:

$$R2 = \frac{R1 - (n-1)/d}{n}.$$

Falls erforderlich, können die einzelnen Verfahrensschritte zur Anpassung bzw. Auslegung der Krümmung der Abdeckung insbesondere wenigstens ein weiteres Mal zur Auslegung der Krümmung in der zweiten Referenzebene RE2 oder einer oder mehreren weiteren Referenzebenen wiederholt werden.

Hierdurch lässt sich auf besonders einfache Art und Weise eine besonders vorteilhafte Auslegung der Krümmung der Abdeckung 20 erreichen, wobei sich auf mit einer derartig ausgelegten Abdeckung 20 auch mit einer gekrümmten Abdeckung 20 eine nur geringe unerwünschte optische Beeinflussung der Bildinformation bei der Erfassung durch die Kamera realisieren lässt. Insbesondere lässt sich hierdurch eine Kameraanordnung 100 bereitstellen, bei welcher die Krümmung der Außenfläche 21 und die Krümmung der Innenfläche 22 der Abdeckung 20 im optisch wirksamen Bereich 23 derart aufeinander abgestimmt sind und die Abdeckung 20 derart relativ zur Kamera angeordnet ist, dass eine unerwünschte optische Beeinflussung der die Bildinformation repräsentierenden Lichtstrahlen, welche die Abdeckung 20 bei einer Erfassung einer Bildinformation aus der Umgebung durchdringen, innerhalb eines definierten Bereichs liegt.

Eine besonders gute Reduzierung der unerwünschten optischen Beeinflussung ergibt sich, insbesondere ein gutes Kontrastverhalten über einen großen Bereich des Kamerasichtfeldes 11, wenn die Krümmung von Außenfläche 21 und Innenfläche 22 im optisch wirksamen Bereich 23 jeweils konstant ist, d.h. nicht veränderlich bzw. wenn alle zugehörigen ersten Krümmungskreise jeweils den gleichen Radius R1 und den gleichen Mittelpunkt M1 aufweisen und alle zugehörigen zweiten Krümmungskreise jeweils den gleichen Radius R2 und den gleichen Mittelpunkt M2 und nicht unterschiedlich sind im optisch wirksamen Bereich 23. Grundsätzlich kann die Krümmung im optisch wirksamen Bereich 23 jedoch auch veränderlich sein.

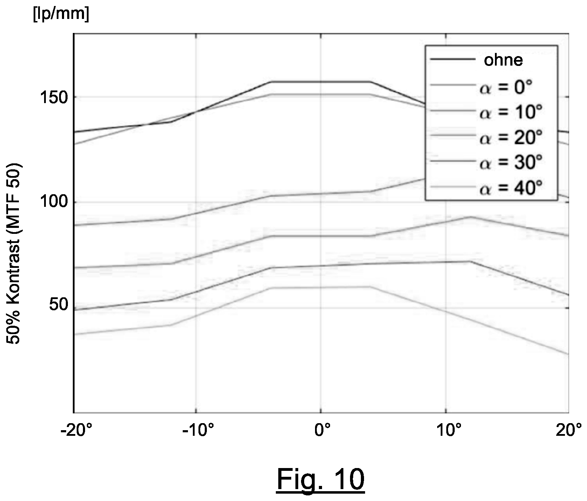

Die Krümmung der Abdeckung 20 der Kameraanordnung 100 aus Fig. 1 ist wie vorbeschrieben ausgelegt worden, d.h. mittels eines erfindungsgemäßen Verfahrens. Hierdurch lässt sich eine besonders vorteilhafte erfindungsgemäße Kameraanordnung 100 bereitstellen, insbesondere eine Kameraanordnung 100, mit der sich auch bei einem Anstellwinkel der Kamera 10 relativ zur optischen Achse AA der Abdeckung 20 von bis zu $\alpha = 30°$ in der ersten Referenzebene RE1 und einem Krümmungsradius von R1 $\approx$ 25 mm der Abdeckung 20 über einen Blickwinkelbereich von $\pm20°$, d.h. über ein Kamerasichtfeld 11 mit einem Öffnungswinkel von bis zu 40° (20° nach links und 20° nach rechts von der optischen Achse AK der Kamera 10) jeweils für eine Frequenz von bis zu 50 lp/mm noch ein Kontrast von mindestens 50% (entspricht "MTF 50") erreichen, wie **Fig. 10** beispielhalber zeigt.

Grundsätzlich ist eine Vielzahl von Abwandlungen der beschriebenen Ausgestaltungen und Ausführungsbeispiele möglich, ohne den durch die Patentansprüche definierten Schutzbereich zu verlassen.

Bezugszeichenliste:

| | |
|---|---|
| 100 | erfindungsgemäße Kameraanordnung |
| 10 | Kamera |
| 20 | erfindungsgemäße Abdeckung |
| 11 | Kamerasichtfeld |
| 21 | Außenfläche der Abdeckung |
| 22 | Innenfläche der Abdeckung |
| 23 | optisch wirksamer Bereich |
| 30 | Objekt |
| 40 | optisches Element, Linse |
| $\alpha$ | Winkel zwischen der optischen Achse der Kamera und der optischen Achse der Abdeckung in der ersten Referenzebene |
| $\beta$ | Winkel zwischen der optischen Achse der Kamera und der optischen Achse der Abdeckung in der zweiten Referenzebene |
| A | optische Achse |
| AA | optische Achse der Abdeckung im optisch wirksamen Bereich |
| AK | optische Achse der Kamera |
| d | Wandstärke der Abdeckung |
| DPa | Durchstoßpunkt der optischen Achse der Kamera bzw. der Mittelpunktgeraden durch die Außenfläche |
| DPi | Durchstoßpunkt der Mittelpunktgeraden durch die Innenfläche |
| M1i | Krümmungsmittelpunkt eines ersten Krümmungskreises, welcher die Krümmung der Außenfläche definiert |
| M2i | Krümmungsmittelpunkt eines zweiten Krümmungskreises, welcher die Krümmung der Innenfläche definiert |
| MG | Mittelpunktgerade |
| L1, L2 | Lichtstrahlen |
| R1i | Krümmungsradius eines ersten Krümmungskreises, welcher die Krümmung der Außenfläche definiert |
| R2i | Krümmungsradius eines zweiten Krümmungskreises, welcher die Krümmung der Innenfläche definiert |
| RE1 | erste Referenzebene |
| RE2 | zweite Referenzebene |
| SF | Sagittal-Brennpunkt |
| TF | Tangential-Brennpunkt |

**Patentansprüche**

1. Kameraanordnung (100) für ein Fahrzeug, insbesondere für einen Innenraum eines Fahrzeugs, aufweisend:

   - eine Kamera (10) mit einer optischen Achse (AK) und einem Kamerasichtfeld (11) zur optischen Erfassung wenigstens einer Bildinformation einer Umgebung, und

- eine flächige Abdeckung (20) mit einer Außenfläche (21), einer Innenfläche (22) und mit wenigstens einem optisch wirksamen Bereich (23), in welchem die Abdeckung (20) zumindest teilweise lichtdurchlässig ist und für eine optische Erfassung einer Bildinformation aus der Umgebung von zugehörigen, die Bildinformation repräsentierenden Lichtstrahlen (L1, L2) zumindest teilweise durchdringbar ist,

wobei die Abdeckung (20) derart angeordnet ist, dass sie mit ihrem optisch wirksamen Bereich (23) in das Kamerasichtfeld (11) ragt und das Sichtfeld (11) der Kamera (10) zumindest teilweise abdeckt und sich die Außenfläche (21) auf einer von der Kamera (10) abgewandten Seite befindet und die Innenfläche (22) auf einer der Kamera (10) zugewandten Seite,

wobei im optisch wirksamen Bereich (23) der Abdeckung (20) die Außenfläche (21) und die Innenfläche (22) jeweils wenigstens abschnittsweise gekrümmt sind,

wobei eine Krümmung der Außenfläche (21) und eine Krümmung der Innenfläche (22) im optisch wirksamen Bereich derart ausgelegt und aufeinander abgestimmt sind und die Abdeckung (20) derart relativ zur Kamera (10) angeordnet ist, dass wenigstens eine Größe, welche eine unerwünschte optische Beeinflussung durch die Abdeckung (20) charakterisiert, innerhalb eines definierten Bereichs liegt,

wobei die Außenfläche (21) in ihrem optisch wirksamen Bereich (23) zumindest teilweise konvex gekrümmt ist,

wobei die Außenfläche (21) wenigstens in einer ersten Referenzebene (RE1) konvex gekrümmt ist und die Krümmung der Außenfläche (21) in dieser ersten Referenzebene (RE1) durch eine erste Schar von in der ersten Referenzebene (RE1) liegenden, ersten Krümmungskreisen mit jeweils einem ersten Krümmungsmittelpunkt (M1) und einem ersten Krümmungsradius (R1) definiert ist,

wobei die Innenfläche (22) in ihrem optisch wirksamen Bereich (23) zumindest teilweise konkav gekrümmt ist,

wobei die Innenfläche (22) wenigstens in der ersten Referenzebene (RE1) konkav gekrümmt ist und die Krümmung der Innenfläche (22) in dieser ersten Referenzebene (RE1) durch eine zweite Schar von in der ersten Referenzebene (RE1) liegenden, zweiten Krümmungskreisen mit jeweils einem zweiten Krümmungsmittelpunkt (M2) und einem zweiten Krümmungsradius (R2) definiert ist,

**dadurch gekennzeichnet, dass**
die Abdeckung (20) derart ausgestaltet ist, dass wenigstens in der ersten Referenzebene (RE1) an den Durchstoßpunkten (DPa, DPi) der optischen Achse (AK) der Kamera (10) durch die Abdeckung (20) die Krümmung der Außenfläche (21) und die Krümmung der Innenfläche (22) voneinander verschieden sind.

2. Kameraanordnung (100) nach Anspruch 1, **dadurch gekennzeichnet, dass**
ein durch die Abdeckung (20) verursachter Kontrastverlust in einem definierten Bereich liegt, insbesondere einen definierten Grenzwert nicht überschreitet.

3. Kameraanordnung (100) nach Anspruch 1 oder 2, **dadurch gekennzeichnet, dass**

die Abdeckung (20) derart relativ zur Kamera (10) angeordnet ist, dass das Kamerasichtfeld (11) zumindest so viel von der Abdeckung (20) abgedeckt ist, dass die optische Achse (AK) der Kamera (10) die Abdeckung innerhalb des optisch wirksamen Bereichs (23) durchstößt,

wobei die optische Achse (AK) der Kamera (10) nicht mit der optischen Achse (AA) des optisch wirksamen Bereichs (23) der Abdeckung (20) fluchtet, und

wobei die Abdeckung (20) derart gekrümmt ist und relativ zur Kamera (10) angeordnet ist, dass die optische Achse (AK) der Kamera (10) die Außenfläche (21) und/oder die Innenfläche (22) der Abdeckung (20) nicht senkrecht durchstößt.

4. Kameraanordnung (100) nach Anspruch 1, **dadurch gekennzeichnet, dass**
in der ersten Referenzebene (RE1) wenigstens ein erster Krümmungsradius (R1) und/oder ein zweiter Krümmungsradius (R2) kleiner ist als 100 mm, 90 mm, 80 mm, 70 mm, 60 mm, 50 mm, 40 mm, 30 mm oder 20 mm, jedoch größer oder gleich 5 mm, 10 mm, 15 mm, 20 mm, oder 25 mm.

5. Kameraanordnung (100) nach Anspruch 1, **dadurch gekennzeichnet, dass**

die Abdeckung (20) im Bereich des Durchstoßpunktes (DPa) der optischen Achse (AK) der Kamera (10) durch die Außenfläche (21) in der ersten Referenzebene (RE1) derart gekrümmt ist, dass zumindest näherungsweise gilt:

$$R2 = \frac{R1-(n-1)/d}{n},$$

wobei $R1$ der erste Krümmungsradius des ersten Krümmungskreises ist, welcher die Krümmung der Außenfläche in der ersten Referenzebene definiert,

wobei R2 der zweite Krümmungsradius des zweiten Krümmungskreises ist, welcher die Krümmung der Innenfläche in der ersten Referenzebene definiert,

wobei n ein optischer Index der Abdeckung im Bereich des Durchstoßpunktes der optischen Achse der Kamera durch die Außenfläche ist, und

wobei d die Wandstärke der Abdeckung an diesem Durchstoßpunkt ist.

6. Verfahren, insbesondere computerimplementiertes Verfahren, zur Auslegung einer Krümmung einer Abdeckung (20) für eine Kameraanordnung (100) nach einem der Ansprüche 1 bis 5, wobei das Verfahren die folgenden Schritte umfasst:

a) Definieren der Soll-Position und Soll-Orientierung der Abdeckung (20),
b) Definieren der Soll-Position und Soll-Orientierung der Kamera (10),
c) Ermitteln des Durchstoßpunktes (DPa, DPi) der optischen Achse (AK) der Kamera (10) durch die Außenfläche (21) oder die Innenfläche (22) der Abdeckung (20),
d) Ermitteln der Krümmung der jeweiligen Fläche (21, 22) im zugehörigen, ermitteln Durchstoßpunkt (DPa, DPi) der optischen Achse (AK) der Kamera (10) in einer ausgewählten Referenzebene (RE1, RE2), wobei der Mittelpunkt (M1, M2) und der Radius (R1, R2) des zugehörigen, die Krümmung in der ausgewählten Referenzebene (RE1, RE2) am Durchstoßpunkt (DPa, DPi) definierenden Krümmungskreises ermittelt werden, und
e) Anpassen der Krümmung der anderen Fläche (22, 21) der Abdeckung (20) an die in Schritt d) ermittelte Krümmung im Durchstoßpunkt (DPa, DPi) in der ausgewählten Referenzebene (RE1, RE2), sodass eine unerwünschte optische Beeinflussung, der die Bildinformation repräsentierenden Lichtstrahlen (L1, L2), welche die Abdeckung (20) bei einer Erfassung einer Bildinformation aus der Umgebung durchdringen, innerhalb eines definierten Bereichs liegt,
f) wobei das Anpassen der Krümmung der anderen Fläche (22, 21) in der ausgewählten Referenzebene (RE1, RE2) erfolgt, indem die folgenden Schritte durchgeführt werden:

f1) Ermitteln der Wandstärke (d) der Abdeckung (20),
f2) Bestimmen des Mittelpunkts (M2, M1) des zugehörigen, gesuchten Krümmungskreises in Abhängigkeit von dem in Schritt d) ermittelten Mittelpunkt (M1, M2) des die Krümmung am Durchstoßpunkt (DPa, DPi) definierenden Krümmungskreises sowie in Abhängigkeit von der Wandstärke (d) der Abdeckung am Durchstoßpunkt (DPa, DPi) durch Ermitteln des Punktes (M2, M1), der sich ergibt, wenn der in Schritt d) bestimmte Mittelpunkt (M1, M2) des Krümmungskreises in der zugehörigen Referenzebene (RE1, RE2) entlang einer Mittelpunktgeraden (MG), welche durch den Durchstoßpunkt (DPa, DPi) und den Mittelpunkt (M1, M2) des Krümmungskreises aus Schritt d) verläuft, um den Betrag der Wandstärke (d) der Abdeckung (20) am Durchstoßpunkt (DPa, DPi) in senkrechter Richtung entlang der Mittelpunktgeraden (MG) nach innen oder nach außen verschoben wird,
f3) Ermitteln eines optischen Index (n) der Abdeckung (20), und
f4) Bestimmen des Radius (R2, R1) des zugehörigen, die gesuchte Krümmung der anderen Fläche (22, 21) definierenden Krümmungskreises in Abhängigkeit von dem in Schritt d) ermittelten Krümmungsradius (R1, R2), der gewünschten Wandstärke (d) der Abdeckung (20) am Durchstoßpunkt (DPa, DPi) der optischen Achse (AK) in der Referenzebene (RE1, RE2) und dem optischen Index (n) derart, dass die folgende Beziehung zumindest näherungsweise erfüllt ist:

$$R2 = \frac{R1-(n-1)/d}{n},$$

wobei $R1$ der erste Krümmungsradius des ersten Krümmungskreises ist, welcher die Krümmung der Außenfläche in der ersten Referenzebene definiert,
wobei $R2$ der zweite Krümmungsradius des zweiten Krümmungskreises ist, welcher die Krümmung der Innenfläche in der ersten Referenzebene definiert,
wobei $n$ ein optischer Index der Abdeckung im Bereich des Durchstoßpunktes der optischen Achse der Kamera durch die Außenfläche ist, und
wobei $d$ die Wandstärke der Abdeckung an diesem Durchstoßpunkt ist.

**7.** Abdeckung (20) für eine Kameraanordnung (100), **dadurch gekennzeichnet, dass** die Abdeckung (20) nach einem der Ansprüche 1 bis 5 ausgebildet ist.

**8.** Vorrichtung mit Mitteln zur Durchführung eines Verfahrens nach Anspruch 6, **dadurch gekennzeichnet, dass** die Vorrichtung zur Durchführung eines Verfahrens nach Anspruch 6 ausgebildet und eingerichtet ist.

**9.** Computerprogramm mit Anweisungen, die, wenn das Programm von einem Computer ausgeführt wird, den Computer veranlassen, das Verfahren nach Anspruch 6 auszuführen.

**10.** Computerlesbares Speichermedium mit darauf gespeicherten Befehlen, die, wenn die Befehle von einem Computer ausgeführt werden, den Computer veranlassen, das Verfahren nach Anspruch 6 auszuführen.

100

23

21

20

10

AK

AA

11

22

d

Fig. 1

Fig. 2

Fig. 3

## Fig. 4

## Fig. 5

## Fig. 6

## Fig. 7

Fig. 8

Fig. 9

Fig. 10